(19) Europäisches Patentamt
European Patent Office
Office européen des brevets

(11) Veröffentlichungsnummer : **0 456 090 B1**

(12) # EUROPÄISCHE PATENTSCHRIFT

(45) Veröffentlichungstag der Patentschrift : **13.07.94 Patentblatt 94/28**

(51) Int. Cl.$^5$ : **A01N 25/32,** A01N 35/10

(21) Anmeldenummer : **91106993.8**

(22) Anmeldetag : **30.04.91**

(54) **Herbizide Mittel, die Cyclohexenonderivate als herbizide Wirkstoffe und Naphthalinderivate als Antidots enthalten.**

(30) Priorität : **09.05.90 DE 4014985**

(43) Veröffentlichungstag der Anmeldung : **13.11.91 Patentblatt 91/46**

(45) Bekanntmachung des Hinweises auf die Patenterteilung : **13.07.94 Patentblatt 94/28**

(84) Benannte Vertragsstaaten : **AT CH DE ES FR GB IT LI NL**

(56) Entgegenhaltungen :
**EP-A- 0 368 212**
**EP-A- 0 368 227**
**CA-A- 1 202 498**
**DE-A- 1 952 910**
**DE-A- 3 029 645**
**DE-A- 3 808 355**
**US-A- 3 749 566**
**WEED SCIENCE Bd. 32, Nr. 1, Januar 1984, GAINESVILLE, FLA, US; Seiten 51 - 58; K.K.HATZIOS: 'Interactions Between Selected Herbicides and Protectants on Corn (Zea mays)'**

(73) Patentinhaber : **BASF Aktiengesellschaft**
**Carl-Bosch-Strasse 38**
**D-67063 Ludwigshafen (DE)**

(72) Erfinder : **Saupe, Thomas, Dr.**
**Kressenwiesenweg 13**
**W-6902 Sandhausen (DE)**
Erfinder : **Kast, Juergen, Dr.**
**Kastanienstrasse 24**
**W-6737 Boehl-Iggelheim (DE)**
Erfinder : **Misslitz, Ulf. Dr.**
**Am Herzel 40**
**W-6730 Neustadt (DE)**
Erfinder : **Hagen, Helmut, Dr.**
**Max-Slevogt-Strasse 17 e**
**W-6710 Frankenthal (DE)**
Erfinder : **Nilz, Gerhard, Dr.**
**Haardtstrasse 13**
**W-6701 Dannstadt-Schauernheim (DE)**
Erfinder : **Pfister, Juergen, Dr.**
**Ziegelofenweg 1**
**W-6720 Speyer (DE)**
Erfinder : **Walter, Helmut, Dr.**
**Gruenstadter Strasse 82**
**W-6719 Obrigheim (DE)**
Erfinder : **Landes, Andreas, Dr.**
**Untere Hart 12**
**W-6703 Limburgerhof (DE)**

EP 0 456 090 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft herbizide Mittel, die Cyclohexenonderivate als herbizide Wirkstoffe und Naphthalinderivate als Antidots enthalten, sowie Verfahren zur selektiven Bekämpfung von unerwünschtem Pflanzenwuchs mit diesen herbiziden Mitteln.

Bei den herbiziden Wirkstoffen aus der Gruppe der Cyclohexenonderivate handelt es sich um Verbindungen der Formel II

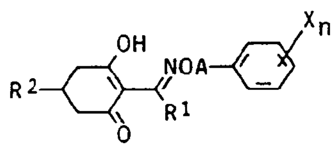 (II),

in der die Substituenten folgende Bedeutung haben:

$R^1$ eine $C_1$-$C_6$-Alkylgruppe;

A $C_4$-Alkylen- oder $C_4$-Alkenylenkette, wobei diese Ketten ein bis drei $C_1$-$C_3$-Alkylgruppen und/oder Halogenatome tragen können;

X Nitro, Cyano, Halogen, $C_1$-$C_4$-Alkyl, $C_1$-$C_4$-Alkoxy, $C_1$-$C_4$-Alkylthio, $C_1$-$C_4$-Halogenalkyl, $C_1$-$C_4$-Halogenalkoxy, Carboxyl, $C_1$-$C_4$-Alkoxycarbonyl, Benzyloxycarbonyl und/oder Phenyl, wobei die aromatischen Reste ein bis drei der folgenden Substituenten tragen können: Nitro, Cyano, Halogen, $C_1$-$C_4$-Alkyl, $C_1$-$C_4$-Alkoxy, $C_1$-$C_4$-Alkylthio, $C_1$-$C_4$-Halogenalkyl, $C_1$-$C_4$-Halogenalkoxy, Carboxyl, $C_1$-$C_4$-Alkoxycarbonyl- und/oder Benzyloxycarbonyl;

n 0 bis 3 oder 1 bis 5 für den Fall, daß X Halogen bedeutet;

$R^2$ eine $C_1$-$C_4$-Alkoxy-$C_1$-$C_6$-alkyl- oder $C_1$-$C_4$-Alkylthio-$C_1$-$C_6$-alkylgruppe;
eine $C_3$-$C_7$-Cycloalkylgruppe oder eine $C_5$-$C_7$-Cycloalkenylgruppe, wobei diese Gruppen ein bis drei der folgenden Substituenten tragen können: $C_1$-$C_4$-Alkyl, $C_1$-$C_4$-Alkoxy, $C_1$-$C_4$-Alkylthio, $C_1$-$C_4$-Halogenalkyl, Hydroxy und/oder Halogen;
ein 5-gliedriger gesättigter Heterocyclus, der ein oder zwei Sauerstoff- und/oder Schwefelatome als Heteroatome enthält und der eine bis drei der folgenden Gruppen tragen kann: $C_1$-$C_4$-Alkyl, $C_1$-$C_4$-Alkoxy, $C_1$-$C_4$-Alkylthio und/oder $C_1$-$C_4$-Halogenalkyl,
ein 6- oder 7-gliedriger Heterocyclus, enthaltend ein oder zwei Sauerstoff- und/oder Schwefelatome und ein bis zwei Doppelbindungen, wobei dieser Ring ein bis drei der folgenden Substituenten tragen kann: Hydroxy, Halogen, $C_1$-$C_4$-Alkyl, $C_1$-$C_4$-Alkoxy, $C_1$-$C_4$-Alkylthio und/oder $C_1$-$C_4$-Halogenalkyl,
ein 5-gliedriger Heteroaromat, enthaltend ein bis zwei Stickstoffatome und ein Sauerstoffatom oder ein Schwefelatom, wobei dieser Ring ein bis drei der folgenden Substituenten tragen kann: Halogen, Cyano, $C_1$-$C_4$-Alkyl, $C_1$-$C_4$-Alkoxy. $C_1$-$C_4$-Alkylthio, $C_1$-$C_4$-Halogenalkyl, $C_2$-$C_6$-Alkenyl, $C_2$-$C_6$-Alkenyloxy, $C_2$-$C_6$-Halogenalkenyl und/oder $C_1$-$C_4$-Alkoxy-$C_1$-$C_4$-alkyl,
eine Phenylgruppe oder eine Pyridylgruppe, wobei diese Gruppen ein bis drei der folgenden Substituenten tragen können: Halogen, Nitro, Cyano, $C_1$-$C_4$-Alkyl, $C_1$-$C_4$-Alkoxy, $C_1$-$C_4$-Alkylthio, $C_1$-$C_4$-Halogenalkyl, $C_3$-$C_6$-Alkenyloxy, $C_3$-$C_6$-Alkinyloxy, $C_1$-$C_4$-Alkoxy-$C_1$-$C_4$-alkyl, $C_1$-$C_4$-Alkylthio-$C_1$-$C_4$-alkyl und/oder $-NR^{13}R^{14}$, worin

$R^{13}$ Wasserstoff, eine $C_1$-$C_4$-Alkylgruppe, eine $C_3$-$C_6$-Alkenylgruppe oder eine $C_3$-$C_6$-Alkinylgruppe und

$R^{14}$ Wasserstoff, eine $C_1$-$C_4$-Alkylgruppe, eine $C_3$-$C_6$-Alkenylgruppe, eine $C_3$-$C_6$-Alkinylgruppe, eine $C_1$-$C_6$-Acylgruppe oder ein Benzoylrest, wobei der aromatische Ring ein bis drei der folgenden Substituenten tragen kann: Nitro, Cyano, Halogen, $C_1$-$C_4$-Alkyl, $C_1$-$C_4$-Alkoxy, $C_1$-$C_4$-Alkylthio und/oder $C_1$-$C_4$-Halogenalkyl

bedeuten,
sowie um ihre landwirtschaftlich nutzbaren Salze und Ester von $C_1$-$C_{10}$-Carbonsäuren und anorganischen Säuren.

Die Cyclohexenone II haben offensichtlich sauren Charakter, d.h. sie können einfache Umsetzungsprodukte wie Salze von Alkali- oder Erdalkaliverbindungen oder Enolester bilden.

Die Verbindungen der Formel II können in mehreren tautomeren Formen auftreten, die alle vom Anspruch erfaßt werden.

Die Cyclohexenone der Formel II können sind aus EP-A-368227 bekannt und aus Derivaten der Formel III (EP-A-80 301, EP-A-125 094, EP-A 142 741, US-A 4 249 937, EP-A 137 174 und EP-A 177 913) und den

entsprechenden Hydroxylaminen der Formel IV (Houben-Weyl, 10/1, S. 1181 ff) hergestellt werden (EP-A 169 521).

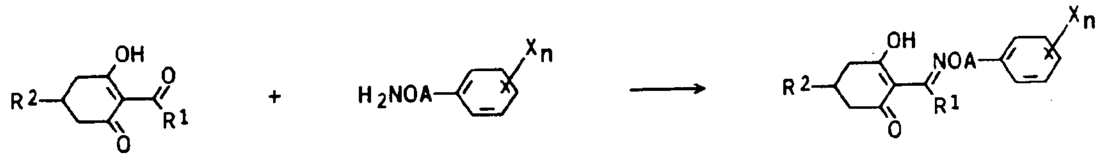

III IV II

Zweckmäßig führt man die Umsetzung in heterogener Phase in einem Lösungsmittel, bei einer ausreichenden Temperatur unterhalb von etwa 80°C, in Gegenwart einer Base durch und verwendet das Hydroxylamin IV in Form seines Ammoniumsalzes.

Geeignete Basen sind z. B. Carbonate, Hydrogencarbonate, Acetate, Alkoholate oder Oxide von Alkali- oder Erdalkalimetallen, insbesondere Natriumhydroxid, Kaliumhydroxid, Magnesiumoxid, Calciumoxid. Außerdem können organische Basen wie Pyridin oder tertiäre Amine Verwendung finden. Die Base wird beispielsweise in einer Menge von 0,5 bis 2 Mol-Äquivalent bezogen auf die Ammoniumverbindung zugesetzt.

Als Lösungsmittel eignen sich beispielsweise Dimethylsulfoxid; Alkohole wie Methanol, Ethanol und Isopropanol; aromatische Kohlenwasserstoffe wie Benzol und Toluol; chlorierte Kohlenwasserstoffe wie Chloroform und Dichlorethan; aliphatische Kohlenwasserstoffe wie Hexan und Cyclohexan; Ester wie Essigsäureethylester und Ether wie Diethylether, Dioxan und Tetrahydrofuran. Vorzugsweise führt man die Umsetzung in Methanol mit Natriumhydrogencarbonat als Base durch.

Die Reaktion ist nach wenigen Stunden beendet. Die Zielverbindung kann z.B. durch Einengen der Mischung, Verteilung des Rückstandes in Methylenchlorid/Wasser und Abdestillieren des Lösungsmittels unter vermindertem Druck isoliert werden.

Man kann für diese Umsetzung aber auch unmittelbar die freie Hydroxylaminbase, z.B. in Form einer wäßrigen Lösung, verwenden; je nach verwendetem Lösungsmittel für die Verbindung III erhält man ein ein- oder zweiphasiges Reaktionsgemisch.

Geeignete Lösungsmittel für diese Variante sind beispielsweise Alkohole wie Methanol, Ethanol, Isopropanol und Cyclohexanol; aliphatische und aromatische, gegebenenfalls chlorierte Kohlenwasserstoffe wie Hexan, Cyclohexan, Methylenchlorid, Toluol und Dichlorethan; Ester wie Essigsäureethylester; Nitrile wie Acetonitril und cyclische Ether wie Dioxan und Tetrahydrofuran.

Alkalimetallsalze der Verbindungen II können durch Behandeln der 3-Hydroxyverbindungen mit Natrium- oder Kaliumhydroxid bzw. -alkoholat in wäßriger Lösung oder in einem organischen Lösungsmittel wie Methanol, Ethanol, Aceton und Toluol erhalten werden.

Andere Metallsalze wie Mangan-, Kupfer-, Zink-, Eisen-, Calcium-, Magnesium- und Bariumsalze können aus den Natriumsalzen in üblicher Weise hergestellt werden, ebenso Ammonium- und Phosphoniumsalze mittels Ammoniak, Ammonium-, Phosphonium-, Sulfonium- oder Sulfoxoniumhydroxiden.

Die Verbindungen des Typs III können z.B. aus den entsprechenden Cyclohexan-1,3-dionen der Formel V

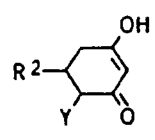

V,

in der

Y Wasserstoff oder Methoxycarbonyl bedeutet

nach bekannten Methoden (Tetrahedron Lett., 2491 (1975)) hergestellt werden.

Es ist auch möglich, die Verbindungen der Formel III über die Zwischenstufe der Enolester VI herzustellen, die bei der Umsetzung von Verbindungen der Formel V mit Säurechloriden VII in Gegenwart von Basen anfallen und anschließend mit bestimmten Imidazol- oder Pyridinderivaten umgelagert werden (JP-OS 79/063 052).

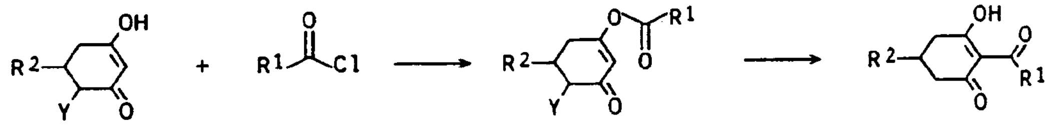

V VII VI III

Zu den Verbindungen der Formel V gelangt man über eine Reihe bekannter Verfahrensschritte ausgehend von bekannten Vorprodukten.

Die Synthese der Hydroxylamine IV, in denen A eine substituierte oder unsubstituierte But-2-enylenbrücke bedeutet, erfolgt gemäß dem nachstehenden Reaktionsschema ausgehend von Anilinderivaten VIII durch Diazotierung und anschließende Kupplung des Diazoniumsalzes mit einem entsprechend substituierten Butadien IX. Das so erhaltene Gemisch aus Xa und Xb wird mit einem cyclischen Hydroxyimid XI gekoppelt und das erhaltene geschützte Hydroxylaminderivat XII mit 2-Aminoethanol zum freien Hydroxylamin IV gespalten.

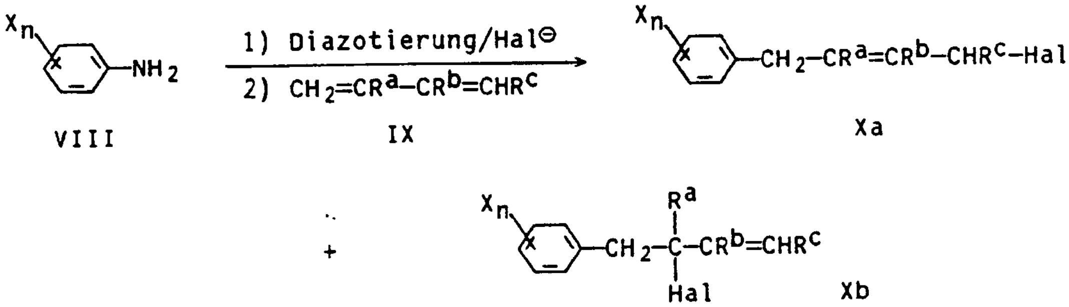


VIII IX Xa

Xb

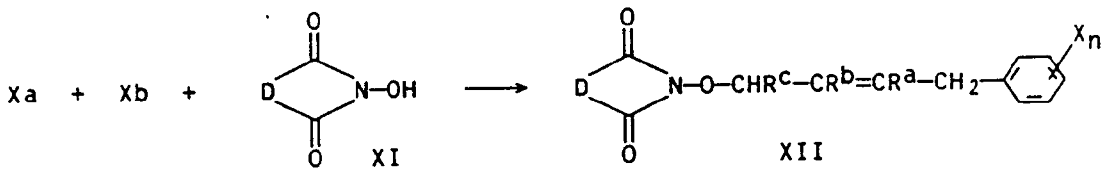

XI XII

XII + 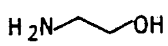 IV

Die Reste $R^a$, $R^b$ und $R^c$ bedeuten hierbei unabhängig voneinander Wasserstoff, $C_1$-$C_3$-Alkylgruppen und/oder Halogenatome. Hal bedeutet Halogenatom, vorzugsweise Chloratom.

Als cyclische Hydroxyimide kommen beispielsweise folgende Substanzen in Betracht:

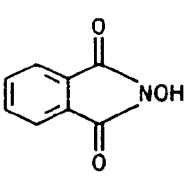 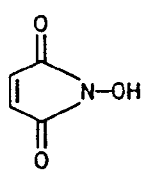 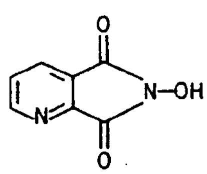

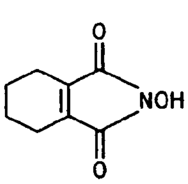 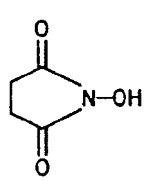 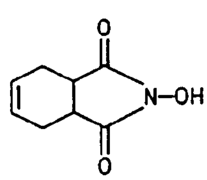

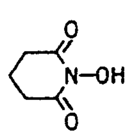

Die zur Synthese der neuen Hydroxylamine der Formel IV benötigten Halogenide Xa lassen sich nach literaturbekannten Verfahren im Gemisch mit Xb herstellen, beispielsweise durch die Umsetzung von Diazoniumsalzen aromatischer und heteroaromatischer Aniline mit Dienen. Die Anwendungsbreite der Reaktion ist in Organic Reactions 11 (1960) 189 bzw. 24 (1976) 225 abgehandelt.

Bei der Kopplung der isomeren Halogenide Xa und Xb an ein cyclisches Hydroxyimid der Formel XI entstehen ausschließlich die cyclischen Imidether der Formel XII, die nach Abspaltung der Schutzgruppe am Stickstoff die Hydroxylamine IV liefern.

Die Umsetzung des Gemisches aus Xa und Xb mit einem Hydroxyimid XI erfolgt in Gegenwart eines säurebindenden Mittels und eines Lösungsmittels. Aus Kostengründen kommt als Hydroxyimid XI bevorzugt Hydroxyphthalimid zum Einsatz.

Als säurebindende Mittel eignen sich Alkalimetallcarbonate wie Kalium- oder Natriumcarbonat, Alkalimetallhydrogencarbonate wie Kalium- und Natriumhydrogencarbonat, tertiäre Amine wie Trimethyl- und Triethylamin und basische Heterocyclen wie Pyridin. Aus Kostengründen kommen bevorzugt Kalium- und Natriumcarbonat in Betracht.

Als Lösungsmittel eignen sich aprotisch dipolare organische Lösungsmittel wie z.B. Dimethylformamid, Dimethylsulfoxid und/oder Sulfolan.

Ferner ist auch eine Alkylierung unter Phasentransferbedingungen möglich. Als organische Lösungsmittel werden hierbei mit Wasser nicht mischbare Verbindungen wie Kohlenwasserstoffe oder Chlorkohlenwasserstoffe eingesetzt. Als Phasentransferkatalysatoren eignen sich quartäre Ammonium- und Phosphoniumsalze.

Die Spaltung der cyclischen Imidether XII gelingt analog einem in EP-A 244 786 beschriebenen Verfahren mit Alkanolaminen. Die Hydroxylamine IV können nach diesem Verfahren als freie Basen oder nach Fällung mit Säuren als Salze isoliert werden. Gut kristallisierende Salze erhält man durch Umsetzung der Basen mit Oxalsäure.

Im Hinblick auf die biologische Wirksamkeit werden Cyclohexenone der Formel II bevorzugt, in denen die Substituenten folgende Bedeutung haben:

$R^1$ verzweigtes oder unverzweigtes $C_1$-$C_6$-Alkyl wie Methyl, Ethyl, Propyl, 1-Methylethyl, Butyl, 1-Methylpropyl, 2-Methylpropyl, 1,1-Dimethylethyl, Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, Hexyl, 1-Methylpentyl, 2-Methylpentyl, 3-Methylpentyl, 4-Methylpentyl, 1, 1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl und 1-Ethyl-2-methylpropyl, insbesondere Ethyl und Propyl;

A $C_4$-Alkylen oder $C_4$-Alkenylen wie Butylen, But-2-enylen und But-3-enylen, welches ein- bis dreifach durch insbesondere Methyl bzw. Ethyl und/ oder Fluor bzw. Chlor substituiert sein kann; bei den ungesättigten Ketten können sowohl die cis- als auch die trans-Form auftreten. Insbesondere bevorzugt ist But-2-enylen.

X Halogen wie Fluor, Chlor, Brom und Iod, insbesondere Fluor und Chlor;

$C_1$-$C_4$-Alkyl wie Methyl, Ethyl, Propyl, 1-Methylethyl, Butyl, 1-Methylpropyl, 2-Methylpropyl und 1,1-Dimethylethyl, insbesondere Methyl und 1,1-Dimethylethyl,

$C_1$-$C_4$-Alkoxy wie Methoxy, Ethoxy, Propoxy, 1-Methylethoxy, Butoxy, 1-Methylpropoxy, 2-Methylpropoxy und 1,1-Dimethylethoxy, insbesondere Methoxy, Ethoxy, 1-Methylethoxy und 1,1-Dimethylethoxy,

$C_1$-$C_4$-Alkylthio wie Methylthio, Ethylthio, Propylthio, 1-Methylethylthio, Butylthio, 1-Methylpropylthio, 2-Methylpropylthio und 1,1-Dimethylethylthio, insbesondere Methylthio und Ethylthio,

partiell oder vollständig halogeniertes $C_1$-$C_4$-Alkyl wie Fluormethyl, Difluormethyl, Trifluormethyl, Chlordifluormethyl, Dichlorfluormethyl, Trichlormethyl, 1-Fluorethyl, 2-Fluorethyl, 2,2-Difluorethyl, 2,2,2-Trifluorethyl, 2-Chlor-2,2-difluorethyl, 2,2-Dichlor-2-fluorethyl, 2,2,2-Trichlorethyl und Pentafluorethyl, insbesondere Difluormethyl, Trifuormethyl, 2,2,2-Trifluorethyl und Pentafluorethyl,

partiell oder vollständig halogeniertes $C_1$-$C_4$-Alkoxy wie Difluormethoxy, Trifluormethoxy, Chlordifluormethoxy, Dichlorfluormethoxy, 1-Fluorethoxy, 2-Fluorethoxy, 2,2-Difluorethoxy, 1,1,2,2-Tetrafluorethoxy, 2,2,2-Trifluorethoxy, 2-Chlor-1,1,2-trifluorethoxy und Pentafluorethoxy, insbesondere Trifluormethoxy,

$C_1$-$C_4$-Alkoxycarbonyl wie Methoxycarbonyl, Ethoxycarbonyl, Propyloxycarbonyl, 1-Methylethoxycarbonyl, Butyloxycarbonyl und 1,1-Dimethylethoxycarbonyl, insbesondere Methoxycarbonyl, Ethoxycarbonyl und 1,1-Dimethylethoxycarbonyl, insbesondere Methoxycarbonyl sowie

Wasserstoff, Nitro, Cyano, Carboxyl,

Benzyloxycarbonyl und Phenyl, wobei die aromatischen Reste ihrerseits ein bis drei der folgenden Reste

tragen können: Nitro, Cyano, Carboxyl, Benzyloxycarbonyl, Halogen wie im allgemeinen und im Besonderen bei X genannt; Alkyl wie bei $R^1$ genannt, insbesondere Methyl, Ethyl und 1-Methylethyl; Alkoxy wie vorstehend genannt, insbesondere Methoxy und Ethoxy; Alkylthio wie vorstehend genannt, insbesondere Methylthio; Halogenalkyl wie vorstehend genannt, insbesondere Trifluormethyl; Halogenalkoxy wie vorstehend genannt, insbesondere Difluormethoxy und Trifluormethoxy und/oder Alkoxycarbonyl wie vorstehend genannt, insbesondere Methoxycarbonyl und Ethoxycarbonyl.

Besonders bevorzugt sind bei diesen aromatischen Resten unsubstituierte oder einfach substituierte Vertreter.

n 0, 1, 2 oder 3, insbesondere 1 oder 2. Bei mehreren Resten X können die Substituenten gleich oder verschieden sein.

$R^2$ Alkyl wie unter $R^1$ genannt, welches eine der unter X genannten Alkoxy- oder Alkylthiogruppe bevorzugt in 1-, 2- oder 3-Position tragen kann, insbesondere 2-Ethylthiopropyl;

5-gliedriges Heterocycloalkyl wie Tetrahydrofuranyl, Tetrahydrothienyl, Dioxolanyl, Dithiolanyl und Oxathiolanyl, insbesondere Tetrahydrofuranyl, Tetrahydrothienyl und Dioxolanyl, wobei diese Ringe ein bis drei der bereits unter X genannten $C_1$-$C_4$-Alkylgruppen, $C_1$-$C_4$-Alkoxygruppen, $C_1$-$C_4$-Alkylthiogruppen und/oder $C_1$-$C_4$-Halogenalkylgruppen tragen können,

5-gliedriges Heteroaryl wie Pyrrolyl, Pyrazolyl, Imidazolyl, Isoxazolyl, Oxazolyl, Isothiazolyl, Thiazolyl, Furanyl und Thienyl, insbesondere Isoxazolyl und Furanyl,

ein 6- oder 7-gliedriger Heterocyclus wie Tetrahydropyran-3-yl, Dihydropyran-3-yl, Tetrahydropyran-4-yl, Dihydropyran-4-yl, Tetrahydrothiopyran-3-yl, Dihydrothiopyran-3-yl, Tetrahydrothiopyran-4-yl, Dihydrothiopyran-4-yl und Dioxepan-5-yl, insbesondere Tetrahydropyran-3-yl, Tetrahydropyran-4-yl und Tetrahydrothiopyran-3-yl,

ein Phenyl- oder ein Pyridylrest,

wobei die cyclischen Reste ein bis drei der unter X genannten Alkylgruppen, Alkoxygruppen, Alkylthiogruppen und/oder Halogenalkylgruppen tragen können.

Die 5-gliedrigen Heteroaromaten in der Bedeutung $R^2$ können als Substituenten folgende Reste tragen: Halogenatom wie unter X genannt, insbesondere Fluor und Chlor, Alkoxyalkyl wie Methoxymethyl, 2-Methoxyethyl, 2-Methoxypropyl, 3-Methoxypropyl, 2-Methoxy-1-methylethyl, Ethoxymethyl, 2-Ethoxyethyl, 2-Ethoxypropyl, 3-Ethoxypropyl, 2-Ethoxy-1-methylethyl und 1-Ethoxy-1-methylethyl, insbesondere Methoxyethyl und Ethoxyethyl,

Alkenyl wie Ethenyl, 1-Propenyl, 2-Propenyl, 1-Methylethenyl, 1-Butenyl, 2-Butenyl, 3-Butenyl, 1-Methyl-1-propenyl, 1-Methyl-2-propenyl, 2-Methyl-1-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butnyl, 2-Methyl-3-butenyl, 3-Methyl-3-butenyl, 1,1-Dimethyl-2-propenyl, 1,1-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Dimethyl-1-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl und 1-Ethyl-2-methyl-2-propenyl, insbesondere 1-Methylethenyl bzw. entsprechendes Alkenyloxy und/oder Halogenalkenyl.

Die 6- und 7-gliedrigen Heterocyclen können neben den vorstehend genannten Substituenten auch Hydroxygruppen tragen.

Bei den Phenyl- und Pyridylresten kommen als Substituenten neben den obengenannten Gruppen auch folgende Reste in Betracht:

Alkenyloxy wie 2-Propenyloxy, 2-Butenyloxy, 3-Butenyloxy, 1-Methyl-2-propenyloxy, 2-Methyl-2-propenyloxy, 2-Pentenyloxy, 3-Pentenyloxy, 4-Pentenyloxy, 1-Methyl-2-butenyloxy, 2-Methyl-2-butenyloxy, 3-Methyl-2-butenyloxy, 1-Methyl-3-butenyloxy, 2-Methyl-3-butenyloxy, 3-Methyl-3-butenyloxy, 1,1-Dimethyl-2-propenyloxy, 1,2-Dimethyl-2-propenyloxy, 1-Ethyl-2-propenyloxy, 2-Hexenyloxy, 3-Hexenyloxy, 4-Hexenyloxy, 5-Hexenyloxy, 1-Methyl-2-pentenyloxy, 2-Methyl-2-pentenyloxy, 3-Methyl-2-pentenyloxy, 4-Methyl-2-pentenyloxy, 1-Methyl-3-pentenyloxy, 2-Methyl-3-pentenyloxy, 3-Methyl-3-pentenyloxy, 4-Methyl-3-pentenyloxy, 1-Methyl-4-pentenyloxy, 2-Methyl-4-pentenyloxy, 3-Methyl-4-pentenyloxy, 4-Methyl-4-pentenyloxy, 1,1-Dimethyl-2-butenyloxy, 1,1-Dimethyl-3-butenyloxy, 1,2-Dimethyl-2-butenyloxy, 1,2-Dimethyl-3-butenyloxy, 1,3-Dimethyl-2-butenyloxy, 1,3-Dimethyl-3-butenyloxy, 2,2-Dimethyl-3-butenyloxy, 2,3-Dimethyl-2-butenyloxy, 2,3-Dimethyl-3-butenyloxy, 1-Ethyl-2-butenyloxy, 1-Ethyl-3-butenyloxy, 2-Ethyl-2-butenyloxy, 2-Ethyl-3-butenyloxy, 1,1,2-Trimethyl-2-propenyloxy, 1-Ethyl-1-methyl-2-propenyloxy und 1-Ethyl-2-methyl-2-propenyloxy, insbesondere 2-Propenyloxy und 2-Butenyloxy;
Alkinyloxy wie 2-Propinyloxy, 2-Butinyloxy, 3-Butinyloxy, 1-Methyl-2-propinyloxy, 2-Pentinyloxy, 3-Pentinyloxy, 4-Pentinyloxy, 1-Methyl-3-butinyloxy, 2-Methyl-3-butinyloxy, 1-Methyl-2-butinyloxy, 1,1-Dimethyl-2-propinyloxy, 1-Ethyl-2-propinyloxy, 2-Hexinyloxy, 3-Hexinyloxy, 4-Hexinyloxy, 5-Hexinyloxy, 1-Methyl-2-pentinyloxy, 1-Methyl-3-pentinyloxy, 1-Methyl-4-pentinyloxy, 2-Methyl-3-pentinyloxy, 2-Methyl-4-pentinyloxy, 3-Methyl-4-pentinyloxy, 4-Methyl-2-pentinyloxy, 1,1-Dimethyl-2-butinyloxy, 1,1-Dimethyl-3-butinyloxy, 1,2-Dimethyl-3-butinyloxy, 2,2-Dimethyl-3-butinyloxy, 1-Ethyl-2-butinyloxy, 1-Ethyl-3-butinyloxy, 2-Ethyl-3-butinyloxy und 1-Ethyl-1-methyl-2-propinyloxy, insbesondere 2-Propinyloxy und 2-Butinyloxy;
Amino, welches ein oder zwei der folgenden Reste tragen kann: Alkyl wie bei X genannt, insbesondere Methyl und Ethyl; Alkenyl wie vorstehend genannt, insbesondere 2-Propenyl und 2-Butenyl;
Alkinyl wie Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-3-butinyl, 2-Methyl-3-butinyl, 1-Methyl-2-butinyl, 3-Methyl-1-butinyl, 1,1-Dimethyl-2-propinyl, 1-Ethyl-2-propinyl, 1-Hexinyl, 2-Hexinyl, 3-Hexinyl, 4-Alkinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-1-pentinyl, 3-Methyl-4-pentinyl, 4-Methyl-1-pentinyl, 4-Methyl-2-pentinyl, 1,1-Dimethyl-2-butinyl, 1,1-Dimethyl-3-butinyl, 1,2-Dimethyl-3-butinyl, 2,2-Dimethyl-3-butinyl, 3,3-Dimethyl-1-butinyl, 1-Ethyl-2-butinyl, 1-Ethyl-3-butinyl, 2-Ethyl-3-butinyl und 1-Ethyl-1-methyl-2-propinyl, insbesondere 2-Propinyl und 2-Butinyl und/oder
Acyl wie Acetyl, Propionyl, Butyryl, 2-Methyl-propionyl, Pentanoyl, 2-Methylbutyryl, 3-Methylbutyryl, 2,2-Dimethylpropionyl, Hexanoyl, 2-Methylpentanoyl, 3-Methylpentanoyl, 4-Methylpentanoyl, 2,2-Dimethylbutyryl, 2,3-Dimethylbutyryl, 3,3-Dimethylbutyryl und 2-Ethylbutyryl, insbesondere Acetyl und Propionyl oder Benzoyl.

Spezielle Beispiele für Cyclohexenone der Formel II, deren Kulturpflanzenverträglichkeit durch Naphthalinderivate der Formel I verbessert werden kann, sind in den folgenden Tabellen A und B aufgeführt:

Tabelle A

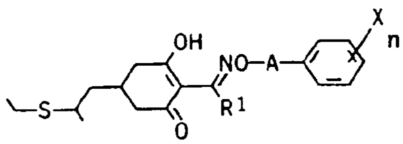

| $R^1$ | A | $X_n$ |
|---|---|---|
| $CH_2CH_3$ | $(CH_2)_4$ | H |
| $(CH_2)_2CH_3$ | $(CH_2)_4$ | H |
| $CH_2CH_3$ | $(CH_2)_2CH=CH$ | H |
| $(CH_2)_2CH_3$ | $(CH_2)_2CH=CH$ | H |
| $CH_2CH_3$ | $(CH_2)_4$ | $4-CF_3$ |
| $(CH_2)_2CH_3$ | $(CH_2)_4$ | $4-CF_3$ |
| $CH_2CH_3$ | $(CH_2)_4$ | 3-F |
| $(CH_2)_2CH_3$ | $(CH_2)_4$ | 3-F |
| $CH_2CH_3$ | $(CH_2)_4$ | 4-F |
| $(CH_2)_2CH_3$ | $(CH_2)_4$ | 4-F |
| $CH_2CH_3$ | $(CH_2)_4$ | $3-CH_3$ |
| $(CH_2)_2CH_3$ | $(CH_2)_4$ | $3-CH_3$ |
| $CH_2CH_3$ | $(CH_2)_4$ | $4-OCH_3$ |
| $(CH_2)_2CH_3$ | $(CH_2)_4$ | $4-OCH_3$ |
| $CH_2CH_3$ | $(CH_2)_4$ | $3-NO_2$ |
| $(CH_2)_2CH_3$ | $(CH_2)_4$ | $3-NO_2$ |
| $CH_2CH_3$ | $(CH_2)_4$ | 3-CN |
| $(CH_2)_2CH_3$ | $(CH_2)_4$ | 3-CN |
| $CH_2CH_3$ | $(CH_2)_4$ | $3-CO_2CH_3$ |
| $(CH_2)_2CH_3$ | $(CH_2)_4$ | $3-CO_2CH_3$ |
| $CH_2CH_3$ | $(CH_2)_4$ | $3-CO_2Ph$ |
| $(CH_2)_2CH_3$ | $(CH_2)_4$ | $3-CO_2Ph$ |
| $CH_2CH_3$ | $(CH_2)_4$ | $4-OCHF_2$ |
| $(CH_2)_2CH_3$ | $(CH_2)_4$ | $4-OCHF_2$ |
| $CH_2CH_3$ | $(CH_2)_4$ | $3-CH_3, 4-Cl$ |
| $(CH_2)_2CH_3$ | $(CH_2)_4$ | $3-CH_3, 4-Cl$ |

Tabelle B

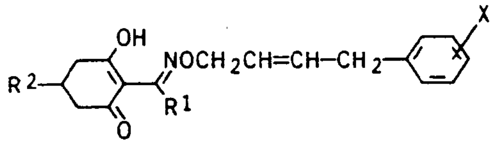

(n = 1)

| $R^1$ | $R^2$ | X |
| --- | --- | --- |
| $CH_2CH_3$ | 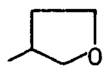 | H |
| $(CH_2)_2CH_3$ | 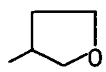 | H |
| $CH_2CH_3$ | 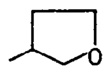 | 4-F |
| $(CH_2)_2CH_3$ | 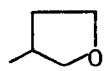 | 4-F |
| $CH_2CH_3$ | 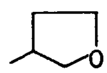 | 3-$CH_3$ |
| $(CH_2)_2CH_3$ | 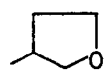 | 3-$CH_3$ |
| $CH_2CH_3$ | 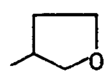 | 3-$CF_3$ |
| $(CH_2)_2CH_3$ | 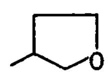 | 3-$CF_3$ |
| $CH_2CH_3$ | 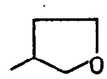 | 4-$C(CH_3)_3$ |
| $(CH_2)_2CH_3$ | 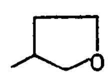 | 4-$C(CH_3)_3$ |
| $CH_2CH_3$ | 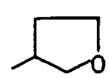 | 3-Cl |
| $(CH_2)_2CH_3$ | 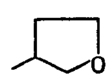 | 3-Cl |

Tabelle 8 (Fortsetzung)

| $R^1$ | $R^2$ | X |
|---|---|---|
| $CH_2CH_3$ | 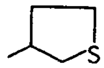 | H |
| $(CH_2)_2CH_3$ | 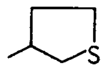 | H |
| $CH_2CH_3$ | 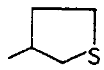 | 4-F |
| $(CH_2)_2CH_3$ | 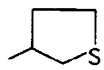 | 4-F |
| $CH_2CH_3$ | 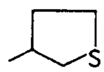 | 3-$CH_3$ |
| $(CH_2)_2CH_3$ | 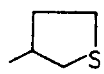 | 3-$CH_3$ |
| $CH_2CH_3$ | 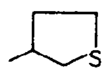 | 3-$CF_3$ |
| $(CH_2)_2CH_3$ | 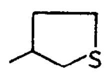 | 3-$CF_3$ |
| $CH_2CH_3$ | 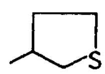 | 4-$C(CH_3)_3$ |
| $(CH_2)_2CH_3$ | 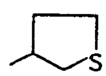 | 4-$C(CH_3)_3$ |
| $CH_2CH_3$ | 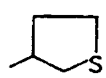 | 3-Cl |
| $(CH_2)_2CH_3$ | 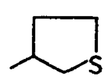 | 3-Cl |
| $CH_2CH_3$ | 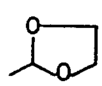 | H |
| $(CH_2)_2CH_3$ | 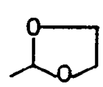 | H |

Tabelle B (Fortsetzung)

| $R^1$ | $R^2$ | X |
|---|---|---|
| $CH_2CH_3$ | 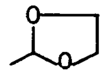 | 4-F |
| $(CH_2)_2CH_3$ | 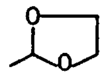 | 4-F |
| $CH_2CH_3$ | 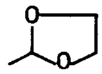 | $3-CH_3$ |
| $(CH_2)_2CH_3$ | 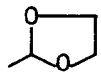 | $3-CH_3$ |
| $CH_2CH_3$ | 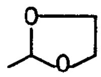 | $3-CF_3$ |
| $(CH_2)_2CH_3$ | 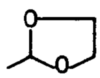 | $3-CF_3$ |
| $CH_2CH_3$ | 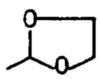 | $4-C(CH_3)_3$ |
| $(CH_2)_2CH_3$ | 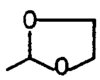 | $4-C(CH_3)_3$ |
| $CH_2CH_3$ | 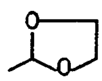 | 3-Cl |
| $(CH_2)_2CH_3$ | 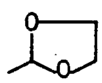 | 3-Cl |
| $CH_2CH_3$ | 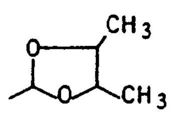 | H |
| $(CH_2)_2CH_3$ | 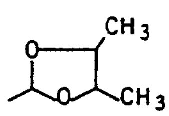 | H |
| $CH_2CH_3$ | 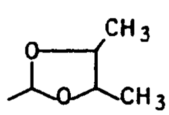 | 4-F |

Tabelle B (Fortsetzung)

| $R^1$ | $R^2$ | X |
|---|---|---|
| $(CH_2)_2CH_3$ | 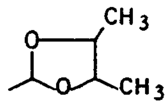 | 4-F |
| $CH_2CH_3$ | 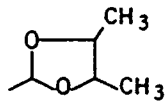 | $3\text{-}CH_3$ |
| $(CH_2)_2CH_3$ | 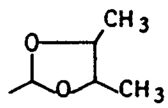 | $3\text{-}CH_3$ |
| $CH_2CH_3$ | 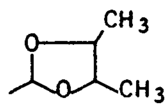 | $3\text{-}CF_3$ |
| $(CH_2)_2CH_3$ | 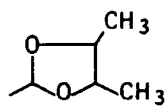 | $3\text{-}CF_3$ |
| $CH_2CH_3$ | 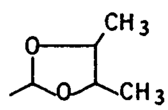 | $4\text{-}C(CH_3)_3$ |
| $(CH_2)_2CH_3$ | 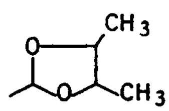 | $4\text{-}C(CH_3)_3$ |
| $CH_2CH_3$ | 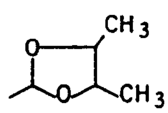 | 3-Cl |
| $(CH_2)_2CH_3$ | 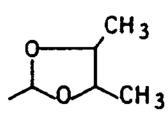 | 3-Cl |
| $CH_2CH_3$ | 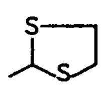 | H |
| $(CH_2)_2CH_3$ | 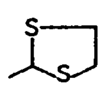 | H |
| $CH_2CH_3$ | 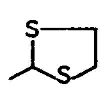 | 4-F |

Tabelle B (Fortsetzung)

| $R^1$ | $R^2$ | X |
|---|---|---|
| $(CH_2)_2CH_3$ | 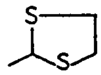 | 4-F |
| $CH_2CH_3$ | 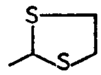 | $3-CH_3$ |
| $(CH_2)_2CH_3$ | 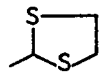 | $3-CH_3$ |
| $CH_2CH_3$ | 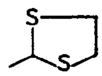 | $3-CF_3$ |
| $(CH_2)_2CH_3$ | 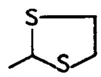 | $3-CF_3$ |
| $CH_2CH_3$ | 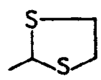 | $4-C(CH_3)_3$ |
| $(CH_2)_2CH_3$ | 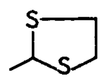 | $4-C(CH_3)_3$ |
| $CH_2CH_3$ | 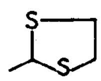 | 3-Cl |
| $(CH_2)_2CH_3$ | 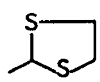 | 3-Cl |
| $CH_2CH_3$ | 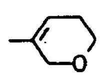 | H |
| $(CH_2)_2CH_3$ | 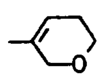 | H |
| $CH_2CH_3$ | 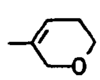 | 4-F |
| $(CH_2)_2CH_3$ | 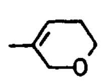 | 4-F |

Tabelle B (Fortsetzung)

| $R^1$ | $R^2$ | X |
|---|---|---|
| $CH_2CH_3$ | 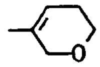 | 3-$CH_3$ |
| $(CH_2)_2CH_3$ | 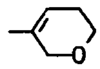 | 3-$CH_3$ |
| $CH_2CH_3$ | 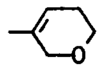 | 3-$CF_3$ |
| $(CH_2)_2CH_3$ | 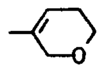 | 3-$CF_3$ |
| $CH_2CH_3$ | 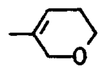 | 4-$C(CH_3)_3$ |
| $(CH_2)_2CH_3$ | 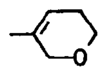 | 4-$C(CH_3)_3$ |
| $CH_2CH_3$ | 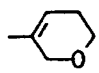 | 3-Cl |
| $(CH_2)_2CH_3$ | 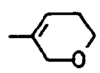 | 3-Cl |
| $CH_2CH_3$ | 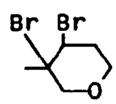 | H |
| $(CH_2)_2CH_3$ | 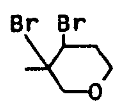 | H |
| $CH_2CH_3$ | 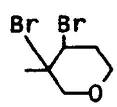 | 4-F |
| $(CH_2)_2CH_3$ | 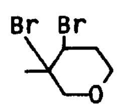 | 4-F |
| $CH_2CH_3$ | 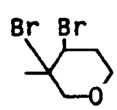 | 3-$CH_3$ |

Tabelle B (Fortsetzung)

| $R^1$ | $R^2$ | X |
|---|---|---|
| $(CH_2)_2CH_3$ | 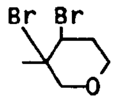 | $3-CH_3$ |
| $CH_2CH_3$ | 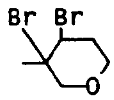 | $3-CF_3$ |
| $(CH_2)_2CH_3$ | 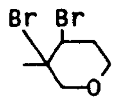 | $3-CF_3$ |
| $CH_2CH_3$ | 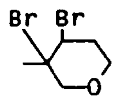 | $4-C(CH_3)_3$ |
| $(CH_2)_2CH_3$ | 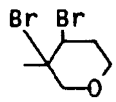 | $4-C(CH_3)_3$ |
| $CH_2CH_3$ | 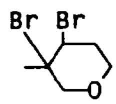 | 3-Cl |
| $(CH_2)_2CH_3$ | 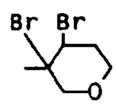 | 3-Cl |
| $CH_2CH_3$ | 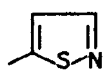 | H |
| $(CH_2)_2CH_3$ | 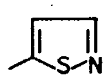 | H |
| $CH_2CH_3$ | 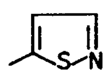 | 4-F |
| $(CH_2)_2CH_3$ | 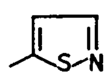 | 4-F |
| $CH_2CH_3$ | 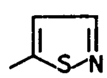 | $3-CH_3$ |

Tabelle B (Fortsetzung)

| $R^1$ | $R^2$ | X |
|---|---|---|
| $(CH_2)_2CH_3$ | 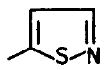 | 3-$CH_3$ |
| $CH_2CH_3$ | 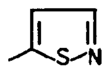 | 3-$CF_3$ |
| $(CH_2)_2CH_3$ | 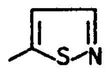 | 3-$CF_3$ |
| $CH_2CH_3$ | 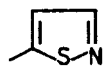 | 4-$C(CH_3)_3$ |
| $(CH_2)_2CH_3$ | 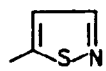 | 4-$C(CH_3)_3$ |
| $CH_2CH_3$ | 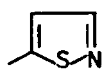 | 3-Cl |
| $(CH_2)_2CH_3$ | 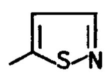 | 3-Cl |
| $CH_2CH_3$ | 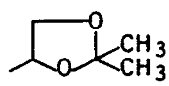 | 3-$CF_3$ |
| $(CH_2)_2CH_3$ | 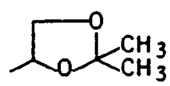 | 3-$CF_3$ |
| $CH_2CH_3$ | 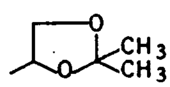 | 4-$C(CH_3)_3$ |
| $(CH_2)_2CH_3$ | 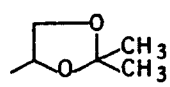 | 4-$C(CH_3)_3$ |
| $CH_2CH_3$ | 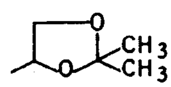 | H |
| $(CH_2)_2CH_3$ | 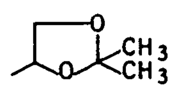 | H |
| $CH_2CH_3$ | 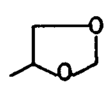 | H |

Tabelle B (Fortsetzung)

| R1 | R2 | X |
|---|---|---|
| $(CH_2)_2CH_3$ | 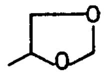 | H |
| $CH_2CH_3$ | 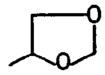 | $3-CF_3$ |
| $(CH_2)_2CH_3$ | 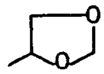 | $3-CF_3$ |
| $CH_2CH_3$ | 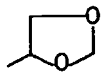 | $4-C(CH_3)_3$ |
| $(CH_2)_2CH_3$ | 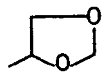 | $4-C(CH_3)_3$ |
| $CH_2CH_3$ | 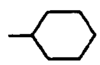 | H |
| $(CH_2)_2CH_3$ | 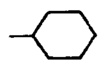 | H |
| $CH_2CH_3$ | 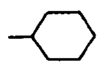 | $3-CF_3$ |
| $(CH_2)_2CH_3$ | 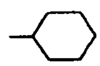 | $3-CF_3$ |
| $CH_2CH_3$ | 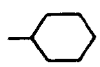 | $4-C(CH_3)_3$ |
| $(CH_2)_2CH_3$ | 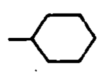 | $4-C(CH_3)_3$ |
| $CH_2CH_3$ | 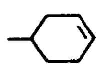 | H |
| $(CH_2)_2CH_3$ | 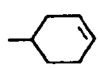 | H |
| $CH_2CH_3$ | 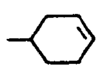 | $3-CF_3$ |
| $(CH_2)_2CH_3$ | 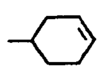 | $3-CF_3$ |
| $CH_2CH_3$ | 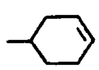 | $4-C(CH_3)_3$ |
| $(CH_2)_2CH_3$ | 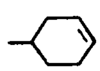 | $4-C(CH_3)_3$ |

Die herbiziden Cyclohexenonderivate der Formel II dienen vorwiegend zur Bekämpfung unerwünschter

Gräser in dicotylen Kulturen. Je nach Struktur der Substituenten und Dosis der Anwendung können Verbindungen aus dieser Gruppe auch zur selektiven Bekämpfung von unerwünschten Gräsern in Gramineenkulturen wie Weizen und Reis eingesetzt werden.

Naphthalinderivate sind in der Literatur sowohl als Herbizide als auch als Antidot der Formel I' beschrieben,

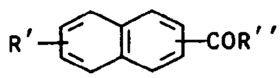

I'

in der die Substituenten u.a. folgende Bedeutung haben:

R' Wasserstoff, Halogen, Nitro, $C_1$-$C_5$-Alkyl oder Phenyl und

R'' Hydroxy, Alkoxy, Alkylthio, Amino oder substituiertes Amino

(HU-A 21 318, HU-A 21 319, HU-A 21 320, HU-A 21 321, HU-A 21 322, HU-A 21 323 und BE 884 634). Diese Antidots werden für die Verminderung von Schäden empfohlen, die durch Herbizide der folgenden Klassen hervorgerufen werden: Harnstoffe, Thiocarbamate, Triazine, Chloracetanilid- und Uracilderivate.

Aufgabe der vorliegenden Erfindung war es, Verbindungen zu finden, welche in der Lage sind, die Schäden an Kulturpflanzen zu kompensieren, welche durch Herbizide des Cyclohexenontyps II hervorgerufen werden.

Entsprechend der Aufgabe wurde gefunden, daß sich Naphthalinderivate der Formel I

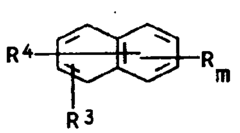

I,

in der die Substituenten und der Index folgende Bedeutung haben:

R $C_1$-$C_4$-Alkyl, $C_1$-$C_4$-Alkylthio, $C_1$-$C_4$-Halogenalkyl, $C_1$-$C_4$-Alkoxy, Halogen, Hydroxy, Nitro oder Benzyl;

m 0, 1, 2 oder 3, wobei die Reste R verschieden sein können, wenn m 2 oder 3 bedeutet;

$R^3$ -CN; $-C(NH_2)NOH$; -C(Z)TR$^5$;

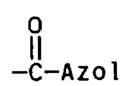 , 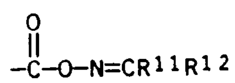 , 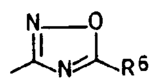 ;

$R^4$ Halogen; $-NR^7R^8$; $-N=CH-R^7$; $-NR^7-SO_2R^9$; $COOR^5$; OH

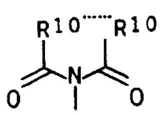 oder 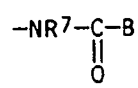

und

Z Sauerstoff oder Schwefel;

T Sauerstoff oder -NR$^5$;

$R^5$ Wasserstoff,

$C_1$-$C_6$-Alkyl, welches einen bis drei der folgenden Substituenten tragen kann: Halogen, $C_1$-$C_4$-Alkylamino, Di-($C_1$-$C_4$-alkyl)amino, $C_1$-$C_4$-Alkoxy und $C_1$-$C_4$-Alkylthio;

Phenyl oder Benzyl, welche einen bis drei der folgenden Gruppen tragen können: $C_1$-$C_4$-Alkyl, $C_1$-$C_4$-Alkoxy, $C_1$-$C_4$-Alkylthio, $C_1$-$C_4$-Halogenalkyl, Cyano, Nitro und/oder Halogen;

$R^6$ Phenyl, welches eine oder zwei der folgenden Gruppen tragen kann: Halogen, $C_1$-$C_4$-Alkyl, $C_1$-$C_4$-Alkoxy, $C_1$-$C_4$-Alkylthio, $C_1$-$C_4$-Halogenalkyl, Cyano und/oder Nitro;

$R^7$ Wasserstoff;

$C_1$-$C_6$-Alkyl, welches einen bis drei der folgenden Substituenten tragen kann: Halogen, $C_1$-$C_4$-Alkylamino, Di-($C_1$-$C_4$-alkyl)amino, $C_1$-$C_4$-Alkoxy, $C_1$-$C_4$-Alkylthio, Phenyl und/oder ($C_1$-$C_4$-Al-

kyl)oxycarbonyl;
Phenyl, welches einen bis drei der folgenden Substituenten tragen kann: Halogen, $C_1$-$C_4$-Alkyl, $C_1$-$C_4$-Alkoxy, $C_1$-$C_4$-Alkylthio, $C_1$-$C_4$-Halogenalkyl, Cyano und/oder Nitro;

$R^8$ Wasserstoff;
$C_1$-$C_6$-Alkyl, welches einen bis drei der folgenden Substituenten tragen kann: Halogen, $C_1$-$C_4$-Alkylamino, Di-($C_1$-$C_4$-alkyl)amino, $C_1$-$C_4$-Alkoxy, $C_1$-$C_4$-Alkylthio und/oder Phenyl;

$R^9$ $C_1$-$C_6$-Alkyl, welches einen bis drei der folgenden Substituenten tragen kann: $C_1$- $C_4$-Alkoxy, $C_1$-$C_4$-Alkylthio, $C_1$-$C_4$-Alkylamino, Di-($C_1$-$C_4$-alkyl)amino, Phenyl und/oder ein bis fünf Halogenatome;
Phenyl oder 5- bis 6-gliedriges Heteroaryl, wobei diese Ringe eine bis drei der folgenden Gruppen tragen können: $C_1$-$C_4$-Alkyl, $C_1$-$C_4$-Alkoxy, $C_1$-$C_4$-Alkylthio, $C_1$-$C_4$-Halogenalkyl, Nitro, Cyano und/oder Halogen;

$R^{10}$ $C_1$-$C_6$-Alkyl oder $C_2$-$C_6$-Alkenyl, wobei diese Gruppen einen bis drei der folgenden Substituenten tragen können: Halogen, $C_1$-$C_4$-Alkoxy, $C_1$-$C_4$-Alkylthio und/oder Phenyl;
Phenyl, welches einen bis drei der folgenden Substituenten tragen kann: $C_1$-$C_4$-Alkyl, $C_1$-$C_4$-Alkoxy, $C_1$-$C_4$-Alkylthio, $C_1$-$C_4$-Halogenalkyl, Nitro, Cyano und/oder Halogen;
oder $R^{10}$...$R^{10}$ gemeinsam
eine $C_2$-$C_4$-Alkylen- oder $C_2$-$C_4$-Alkenylenkette bilden, wobei diese Brücken einen bis drei der folgenden Substituenten tragen können: $C_1$-$C_4$-Alkyl, $C_1$-$C_4$-Alkoxy, $C_1$-$C_4$-Alkylthio, Halogen und/oder Phenyl, oder
einen anellierten Benzolring bilden, welcher ein bis vier Halogenatome und/oder einen bis drei der folgenden Reste tragen kann: $C_1$-$C_4$-Alkyl, $C_1$-$C_4$-Alkoxy, $C_1$-$C_4$-Alkylthio, $C_1$-$C_4$-Halogenalkyl, Cyano, Nitro und/oder Phenyl;

$R^{11}$,$R^{12}$ $C_1$-$C_4$-Alkyl oder gemeinsam mit dem C-Atom, an das sie gebunden sind $C_3$-$C_6$-Cycloalkyl;

B Wasserstoff,
$C_1$-$C_6$-Alkyl, welches einen bis drei der folgenden Substituenten tragen kann: Halogen, $C_1$-$C_4$-Alkoxy, $C_1$-$C_4$-Alkylthio, $C_1$-$C_4$-Alkylamino, Di-($C_1$-$C_4$-alkyl)amino, Phenyl und/oder $C_1$-$C_4$-Alkoxycarbonyl;
$C_1$-$C_4$-Alkoxycarbonyl;
$-NR^7R^8-$ oder
Phenyl, welches ein bis fünf Halogenatome und/oder ein bis drei der folgenden Substituenten tragen kann: $C_1$-$C_4$-Alkyl, $C_1$-$C_4$-Alkoxy, $C_1$-$C_4$-Halogenalkyl, Cyano und/oder Nitro;

ausgezeichnet zum Schutz von Kulturpflanzen aus der Familie der Gramineen eignen und speziell in Kulturen wie Kulturhirse, Reis, Mais, Getreidearten (Weizen, Roggen, Gerste, Hafer), Baumwolle, Zuckerrüben, Zuckerrohr, Soja und Sorghum die Verträglichkeit der Herbizide des Cyclohexenon-Typs II verbessern. Die Schädigungen an den Nutzpflanzen werden abgeschwächt oder ganz unterbunden. Unerwünschte Grasarten werden bekämpft, wobei es für die Wirkung gleichgültig ist, ob diese herbiziden Mittel, bestehend aus herbizidem Wirkstoff und antidotischer Verbindung gemeinsam oder getrennt formuliert und ausgebracht werden bzw. bei getrennter Ausbringung, in welcher Reihenfolge herbizider Wirkstoff und Antidot appliziert werden.

Die Herstellung der Verbindungen I erfolgt nach in der Literatur allgemein üblichen Methoden.

Derivate I, in denen die Reste $R^3$ und $R^4$ benachbarte Ringpositionen einnehmen, erhält man beispielsweise, indem man ein entsprechendes Nitronaphthylderivat XIII analog zu den von Y. Tomioka (Chem. Pharm. Bull. 33 (4), 1360-1366 (1985)) beschriebenen Bedingungen zum Cyanonaphthylamin Ia ($R^3$ = CN, $R^4$ = $NH_2$) umsetzt. Diese Reaktionsfolge ist für die Synthese von 2-Aminonaphthalin-1-carbonitrilderivaten im folgenden Schema dargestellt:

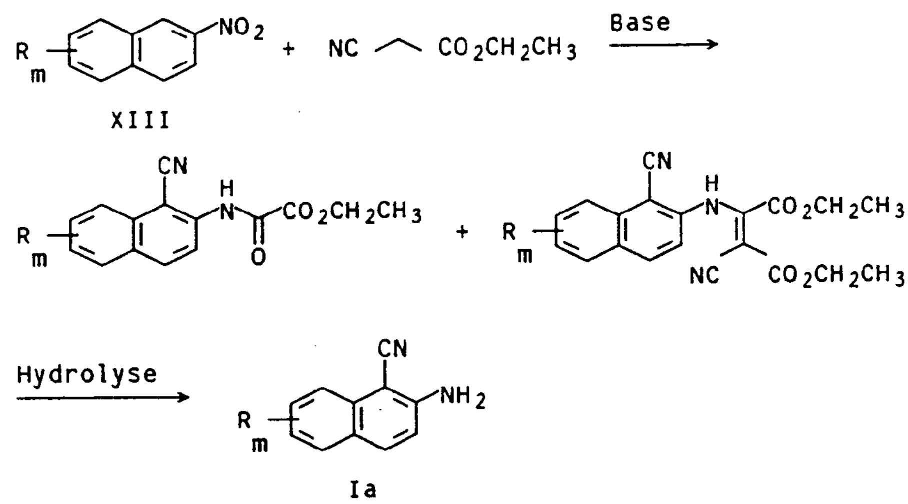


XIII

Ia

Aus den Derivaten Ia lassen sich die entsprechenden Verbindungen I mit Hilfe der literaturüblichen Derivatisierungsmethoden synthetisieren (Derivate der Cyanogruppe: Methoden der organ. Chem. (Houben-Weyl) Band E5, S. 263 ff, S. 710 ff, S. 790 ff, S. 941 ff, S. 1242 ff, S. 1313; Band X/4 (1968), S. 209 ff; Derivate der Aminogruppe: Methoden der organ. Chem. (Houben-Weyl) Band XI (2), S. 3 ff, Band V (2) S. 846).

Die Synthese der Naphthalinderivate I, in denen $R^3$ und $R^4$ nicht benachbarte Ringpositionen einnehmen, ist auf vielfältige Weise möglich und in der Literatur beschrieben. Die Literatur-Zitate sind mit den entsprechenden Verbindungen in Tabelle 8 bzw. 9 im Anschluß an die Synthesebeispiele aufgeführt.

Im Hinblick auf die biologische Wirksamkeit sind Naphthalinderivate bevorzugt, in denen die Substituenten folgende Bedeutung haben:

R Alkyl wie Methyl, Ethyl, Propyl, 1-Methylethyl, Butyl, 1-Methylpropyl, 2-Methylpropyl und 1,1-Dimethylethyl, insbesondere Methyl und Ethyl;
Halogenalkyl wie Fluormethyl, Difluormethyl, Trifluormethyl, 2,2-Difluorethyl, 2,2,2-Trifluorethyl und 1,2,2-Trifluorethyl, insbesondere Trifluormethyl und 2,2,2-Trifluorethyl;
Alkoxy wie Methoxy, Ethoxy, Propyloxy, iso-Propyloxy und ter.-Butyloxy, insbesondere Methoxy und Ethoxy;
Alkylthio wie Methylthio, Ethylthio, iso-Propylthio und tert.-Butylthio, insbesondere Methylthio;
Halogen wie Fluor, Chlor, Brom und Jod, insbesondere Fluor, Chlor und Brom; Hydroxyl; Nitro oder Benzyl;

m 0, 1, 2 oder 3, wobei die Reste R verschieden sein können, wenn m 2 oder 3 bedeutet;

$R^3$ Cyano; ein Carboxaminoxim, eine Carbonsäure, eine Thiocarbonsäure, ein Carbonsäureamid, ein Thiocarbonsäureamid, Oxadiazol, eine Oximestergruppe, worin $R^{11}$ und $R^{12}$ für Methyl, Ethyl, Propyl, Butyl, Cyclopentyl oder Cyclohexyl stehen oder ein Rest -C(O)-Azol, worin Azol einen 1-Imidazolyl-, 1-Pyrazolyl- und insbesondere 1-Triazolylrest bedeutet.

Sofern $R^3$ eine Säure- oder eine Säureamidfunktion bedeutet, kann dieser Rest zusätzlich durch eine der obengenannten Alkylgruppen, durch einen Phenylrest oder einen Benzylrest substituiert sein.

Besonders bevorzugt sind:

- Cyano,
- Carboxamid- und Thiocarboxamidreste, welche unsubstituiert oder durch Methyl, Ethyl, Phenyl und/oder Benzyl substituiert sind und
- 3-Oxadiazolylreste, welche in 5-Position durch einen Phenylring substituiert sind, wobei dieser Phenylrest wiederum bis zu drei Substituenten tragen kann. Als Substituenten kommen hier die bereits unter R genannten Halogenatome, Alkyl-, Alkoxy-, Alkylthio-, Halogenalkyl- und/oder Cyano- bzw. Nitrogruppen in Betracht.

$R^4$ kann die Bedeutung Halogenatom wie unter R genannt besitzen, wobei Fluor, Chlor und Brom bevorzugt sind.

Daneben kann $R^4$ auch eine Carbonsäuregruppe, eine Hydroxylgruppe, eine Aminogruppe oder ein Derivat einer Hydroxygruppe oder einer Aminogruppe bedeuten. Besonders bevorzugt sind hierbei

- Dialkylaminogruppen wie Dimethylamino und Diethylamino
- Diacylaminogruppen wie Diacetylamino, Maleinimino, Dichlormaleinimino, Methylmaleinimino, Phthalimino, Tetrabromophthalimino und 3,4,5,6-Tetrahydrophthalimino,
- Acylaminogruppen wie Acetylamino, Glutarylamino, Benzoylamino und Ethyloxaloylamino

- Sulfonylamingruppen wie Phenylsulfonylamino und N-(Phenylsulfonyl)-N-(1-carboxyl)methylamino
- Iminogruppen wie Benzalimino.

Als Derivate von Hydroxygruppen kommen Salze wie Alkalimetallsalze oder Ester mit anorganischen oder organischen Säuren wie Alkylsulfonsäuren, Phosphorsäuren oder Carbonsäuren in Betracht.

Von den Verbindungen I sind solche ganz besonders bevorzugt, in denen die Reste $R^3$ und $R^4$ benachbarte Ringpositionen einnehmen.

Synthesebeispiele für Cyclohexenonderivate der Formel II

Herstellvorschrift für Beispiel 3.2

a) Zu einer Lösung von 93,1 g (1 mol) Anilin in 340 ml Wasser und 225 ml konz. Salzsäure gab man bei 0°C 69,1 g (1 mol) Natriumnitrit in 100 ml Wasser.

b) In 840 ml Aceton und 50 ml Wasser wurden bei -15°C 67,6 g (1,25 mol) Butadien eingegast, 15,5 g Kupfer(II)chlorid und 22,5 g Calziumoxid zugegeben und anschließend innerhalb 2 Stunden mit der unter a) hergestellten Diazoniumsalzlösung versetzt. Diese Reaktionsmischung ließ man auf 25°C erwärmen. Nach 6 Stunden Rühren wurde mit Methyl-t-butylether extrahiert, das organische Extrakt eingeengt und über einen Dünnfilmverdampfer (0,2 Torr; 80°C) destilliert. Man erhielt so in 55 % Gesamtausbeute ein Gemisch aus 1-Chlor-4-phenylbut-2-en und 3-Chlor-4-phenylbut-1-en (78:22).

c) In 480 ml trockenes N-Methylpyrrolidon gibt man nacheinander 78,3 g (0,48 mol) N-Hydroxyphthalimid und 44,2 g (0,32 mol) Kaliumcarbonat. Bei 40°C Innentemperatur tropft man 88,8 g (0,54 mol) der nach Beispiel b) erhaltenen Chloridmischung zu. Man erwärmt auf 60°C und rührt weitere 6 Stunden. Nach Abkühlen gießt man auf 2 Liter Eiswasser und filtriert ab. Nach Waschen und Trocknen erhält man 90 % d.Th. an (E)-N-(4-Phenyl-2-butenyloxy)-phthalimid.

Fp.: 70-71°C (Isopropanol)

d) 55,5 g (0,19 mol) des Phthalimidethers c) in 190 ml Essigsäureethylester wurden bei 60°C unter Rühren mit 11,6 g (0,19 mol) Ethanolamin versetzt. Nach 5 Stunden wurde das ausgefallene N-(Hydroxyethyl)-phthalimid abfiltriert und das Filtrat mit 18,8 g Oxalsäure in 30 ml Essigsäureethylester versetzt. Man erhielt so 95 % d.Th. an (E)-4-Phenyl-2-butenyloxy-amin als Oxalat-Salz.

Fp.: 127-129°C.

e) 4,3 g (0,016 mol) 2-Propionyl-5-(3-tetrahydrothiopyranyl)-cyclohexan-1,3-dion, 4,5 g (0,018 mol) 4-Phenyl-but-2-enyloxiammoniumoxalat und 3,0 g Natriumhydrogencarbonat wurden in 100 ml Methanol 16 Stunden bei 25°C gerührt. Das Lösungsmittel wurde bei vermindertem Druck abdestilliert und der Rückstand an Kieselgel mit einem Toluol/Essigsäureethylester-Gemisch im Volumenverhältnis 8:2 chromatographiert. Nach dem Entfernen des Lösungsmittels erhielt man 2,2 g (34,3 % d.Th.) 3-Hydroxy-2-[1-(4-Phenyl-but-2-enyloximino)-propyl]-5-(3-tetrahydrothiopyranyl)-cyclohex-2-en-1-on als Harz.

Soweit in den folgenden Tabellen nichts anderes angegeben ist, liegen die Alkenylreste in der E-Konfiguration vor. Die $^1$H-NMR-Angaben beziehen sich auf charakteristische angewählte Signale.

Herstellvorschrift für Beispiel 5.26

a) 71,5 g (0,23 mol) N-(4-(4-Fluorphenyl)-3-butenyloxy)phthalimid (hergestellt nach DE-OS 38 38 310) löst man in 300 ml Tetrahydrofuran, fügt 2 g Palladium auf Aktivkohle (10 %ig) zu und hydriert bei leichtem Überdruck bis das 1,2-fache der theoretischen Wasserstoffmenge verbraucht worden ist.

Man saugt über Kieselgur ab, engt ein und kristallisiert das Isopropanol um.

Ausbeute: 62,8 g (87 %) ; Fp.: 67-68°C

250-MHz $^1$H-NMR (DMSO-$d_6$)

δ (ppm) = 1,8-1,9 (m,4H) ; 2,65 (t, 2H) ; 4,15 (t,2H) 7,0-7,35 (m, 4H) ; 7,86 (s,4H).

b) 61,8 g (0,197 mol) des zuvor hergestellten Phthalimidethers trägt man portionsweise in 92 ml Ethanolamin ein. Nachdem man 3 h auf 60°C erhitzt hat, gießt man nach Erhalten in 400 ml Eiswasser und extrahiert dreimal mit 100 ml Dichlormethan. Die vereinten organischen Phasen werden mit gesättigter Kochsalzlösung gewaschen, getrocknet und im Vakuum eingeengt.

Man isoliert so das 4-(4-Fluorphenyl)butyloxyamin als öl.

250-MHz $^1$H-NMR ($CDCl_3$)

δ (ppm) = 1,5-1,75 (m, 4H) ; 2,61 (t,2H) ; 3,68 (t,2H) ; 5,4 (breites s, 2H), 6,9-7,2 (m,4H)

3 g (11 mol) 2-Butyryl-3-hydroxy-5-tetrahydrothiopyran-3-yl-cyclohex-2-enon wird in 100 ml trockenem Methanol gelöst und mit 2,2 g (12 mmol) 4-(4-Fluorphenyl)-butoxyamin versetzt. Das Gemisch rührt 16 h bei Raumtemperatur und wird dann im Vakuum zur Trockene eingedampft. Der Rückstand wird in Diethylether

aufgenommen und an Kieselgel chromatographiert. Man erhält 3,6 g (80 % d.Th.) der Titelverbindung 2-(1-[4-(4-Fluorphenyl)-butyloximino]butyl-5-tetrahydrothiopyran-3-yl-3-hydroxy-cyclohex-2-enon (Verbindung 5.04).

Tabelle 1

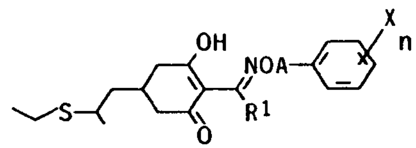

| Nr. | $R^1$ | A | X | n | phys. Daten [NMR*) (δ in ppm)] |
|---|---|---|---|---|---|
| 1.01 | Propyl | But-2-enylen | - | 0 | 4,5 (d, 2H); 5,6-6,1 (m, 2H) |
| 1.02 | Propyl | But-2-enylen | 4-t-Butyl | 1 | 4,5 (d, 2H); 5,6-6,0 (m, 2H); 1,3 (s, 9H) |
| 1.03 | Propyl | But-2-enylen | 4-Trifluormethyl | 1 | 4,5 (d, 2H); 5,6-6,0 (m, 2H) |
| 1.04 | Propyl | But-2-enylen | 4-Fluor | 1 | 4,5 (d, 2H); 5,6-6,0 (m, 2H) |
| 1.05 | Propyl | But-2-enylen | 4-Chlor | 1 | 4,5 (d, 2H); 5,6-6,0 (m, 2H) |
| 1.06 | Propyl | Butylen | - | 0 | 1,0 (s); 4,0-4,2 (m); 7,1-7,4 (m) |
| 1.07 | Ethyl | But-2-enylen | - | 0 | 4,5 (d, 2H); 5,6-6,0 (m, 2H) |
| 1.08 | Propyl | But-2-enylen | 3-Chlor | 1 | 4,5 (d, 2H); 5,6-6,0 (m, 2H) |
| 1.09 | Propyl | But-3-enylen | 4-Chlor | 1 | 4,1 (t, 2H); 6,0-6,5 (m, 2H) |
| 1.10 | Propyl | But-3-enylen | 4-Methyl | 1 | 2,3 (s, 3H); 4,1 (t, 2H); 6,0-6,5 (m, 2H) |
| 1.11 | Propyl | But-3-enylen | 4-Fluor | 1 | 4,1 (t, 2H); 6,0-6,5 (m, 2H) |
| 1.12 | Propyl | But-3-enylen | - | 0 | 4,1 (t, 2H); 6,0-6,6 (m, 2H) |
| 1.13 | Propyl | But-2-enylen | 4-Methoxy | 1 | 3,8 (s, 3H); 4,4 (d, 2H); 5,5-6,0 (m, 2H) |
| 1.14 | Propyl | But-2-enylen | 4-Methyl | 1 | 4,5 (d, 2H); 5,6-6,0 (m, 2H) |

*) ausgewählte Signale

Tabelle 2

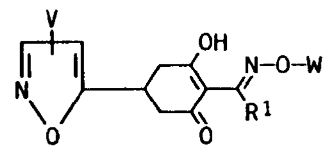

| Nr. | $R^1$ | V | W | phys. Daten [Fp. (°C); NMR*) (δ in ppm)] |
|---|---|---|---|---|
| 2.01 | Ethyl | 3-Ethyl | 4-Phenyl-but-2-enyl | 58-59 |
| 2.02 | Propyl | 3-Ethyl | 4-Phenyl-but-2-enyl | 4,5 (d, 2H), 5,6-6,1 (m, 2H) |
| 2.03 | Ethyl | 3-Isopropyl | 4-Phenyl-but-2-enyl | 57-58 |
| 2.04 | Ethyl | 3-(1-Methoxyethyl) | 4-Phenyl-but-2-enyl | 3,3 (s, 3H), 5,6-6,1 (m, 2H) |

*) ausgewälte Signale

Tabelle 3

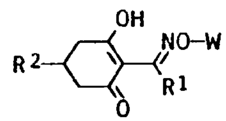

| Nr. | $R^1$ | $R^2$ | W | phys. Daten [Fp (°C); NMR*) (δ in ppm)] |
|---|---|---|---|---|
| 3.01 | Propyl | Tetrahydrothiopyran-3-yl | 4-Phenyl-but-2-enyl | 4,5 (d, 2H); 5,5-6,1 (m, 2H) |
| 3.02 | Ethyl | Tetrahydrothiopyran-3-yl | 4-Phenyl-but-2-enyl | 4,5 (d, 2H); 5,6-6,1 (m, 2H) |
| 3.03 | Propyl | Tetrahydrothiopyran-3-yl | 4-(4-Fluorphenyl)-but-2-enyl | 4,5 (d, 2H); 5,6-6,0 (m, 2H) |
| 3.04 | Propyl | Tetrahydrothiopyran-3-yl | 4-(4-Chlorphenyl)-but-2-enyl | 4,5 (d, 2H); 5,6-6,0 (m, 2H) |
| 3.05 | Propyl | Tetrahydrothiopyran-3-yl | 4-(4-Trifluormethylphenyl)-but-2-enyl | 4,5 (d, 2H); 5,6-6,0 (m, 2H) |
| 3.06 | Propyl | Tetrahydrothiopyran-3-yl | 4-(4-t-Butylphenyl)-but-2-enyl | 4,5 (d, 2H); 5,6-6,1 (m, 2H); 1,3 (s, 9H) |
| 3.07 | Ethyl | Tetrahydrothiopyran-3-yl | 4-(4-Fluorphenyl)-but-2-enyl | 4,5 (d, 2H); 5,6-6,0 (m, 2H) |
| 3.08 | Ethyl | Tetrahydrothiopyran-3-yl | 4-(4-Chlorphenyl)-but-2-enyl | 4,5 (d, 2H); 5,6-6,0 (m, 2H) |
| 3.09 | Ethyl | Tetrahydrothiopyran-3-yl | 4-(4-t-Butylphenyl)-but-2-enyl | 4,5 (d, 2H); 5,6-6,0 (m, 2H); 1,3 (s, 9H) |
| 3.10 | Ethyl | Tetrahydrothiopyran-3-yl | 4-(4-Trifluormethylphenyl)-but-2-enyl | 4,5 (d, 2H); 5,6-6,0 (m, 2H) |
| 3.11 | Methyl | Tetrahydrothiopyran-3-yl | 4-Phenyl-but-2-enyl | 4,5 (d, 2H); 5,6-6,0 (m, 2H); 2,4 (s, 3H) |
| 3.12 | Ethyl | Tetrahydropyran-4-yl | 4-Phenyl-but-2-enyl | 62-64 |
| 3.13 | Ethyl | Tetrahydropyran-4-yl | 4-(4-Fluorphenyl)-but-2-enyl | 4,5 (d, 2H); 5,6-6,0 (m, 2H) |

*) ausgewählte Signale

Tabelle 3 (Fortsetzung)

| Nr. | $R^1$ | $R^2$ | W | phys. Daten [Fp. (°C); NMR*) (δ in ppm)] |
|---|---|---|---|---|
| 3.14 | Ethyl | Tetrahydropyran-4-yl | 4-(4-Chlorphenyl)-but-2-enyl | 4,5 (d, 2H); 5,6-6,0 (m, 2H) |
| 3.15 | Ethyl | Tetrahydropyran-4-yl | 4-(4-t-Butylphenyl)-but-2-enyl | 99-101 |
| 3.16 | Ethyl | Tetrahydropyran-4-yl | 4-(4-Trifluormethylphenyl)-but-2-enyl | 4,5 (d, 2H), 5,6-6,0 (m, 2H) |
| 3.17 | Propyl | Tetrahydropyran-4-yl | 4-Phenyl-but-2-enyl | 4,5 (d, 2H); 5,6-,61 (m, 2H) |
| 3.18 | Propyl | Tetrahydropyran-4-yl | 4-(4-Fluorphenyl)-but-2-enyl | 4,5 (d, 2H); 5,6-6,0 (m, 2H) |
| 3.19 | Propyl | Tetrahydropyran-4-yl | 4-(4-Chlorphenyl)-but-2-enyl | 4,5 (d, 2H); 5,6-6,0 (m, 2H) |
| 3.20 | Propyl | Tetrahydropyran-4-yl | 4-(4-t-Butylphenyl)-but-2-enyl | 84-86 |
| 3.21 | Propyl | Tetrahydropyran-4-yl | 4-(4-Trifluormethylphenyl)-but-2-enyl | 4,5 (d, 2H); 5,6-6,0 (m, 2H) |
| 3.22 | Ethyl | Tetrahydropyran-3-yl | 4-Phenyl-but-2-enyl | 4,5 (d, 2H); 5,6-6,0 (m, 2H) |
| 3.23 | Ethyl | Tetrahydropyran-3-yl | 4-(4-Fluorphenyl)-but-2-enyl | 4,5 (d, 2H); 5,6-6,0 (m, 2H) |
| 3.24 | Ethyl | Tetrahydropyran-3-yl | 4-(4-Chlorphenyl)-but-2-enyl | 4,5 (d, 2H); 5,6-6,0 (m, 2H) |
| 3.25 | Ethyl | Tetrahydropyran-3-yl | 4-(4-t-Butylphenyl)-but-2-enyl | 4,5 (d, 2H); 5,6-6,0 (m, 2H); 1,3 (s, 9H) |
| 3.26 | Ethyl | Tetrahydropyran-3-yl | 4-(4-Trifluormethylphenyl)-but-2-enyl | 4,5 (d, 2H); 5,6-6,1 (m, 2H) |
| 3.27 | Propyl | Tetrahydropyran-3-yl | 4-Phenyl-but-2-enyl | 4,5 (d, 2H); 5,6-6,0 (m, 2H) |
| 3.28 | Propyl | Tetrahydropyran-3-yl | 4-(4-Fluorphenyl)-but-2-enyl | 4,5 (d, 2H); 5,6-6,0 (m, 2H) |
| 3.29 | Propyl | Tetrahydropyran-3-yl | 4-(4-Chlorphenyl)-but-2-enyl | 4,5 (d, 2H); 5,6-6,0 (m, 2H) |
| 3.30 | Propyl | Tetrahydropyran-3-yl | 4-(4-t-Butylphenyl)-but-2-enyl | 4,5 (d, 2H); 5,6-6,0 (m, 2H); 1,3 (s, 9H) |
| 3.31 | Propyl | Tetrahydropyran-3-yl | 4-(4-Trifluormethylphenyl)-but-2-enyl | 4,5 (d, 2H); 5,6-6,0 (m, 2H) |

*) ausgewälte Signale

Tabelle 3 (Fortsetzung)

| Nr. | $R^1$ | $R^2$ | W | phys. Daten [Fp. (°C); NMR*) (δ in ppm)] |
|---|---|---|---|---|
| 3.32 | Ethyl | Tetrahydrothio-pyran-3-yl | 4-(3-Chlorphenyl)-but-2-enyl | 4,5 (d, 2H); 5,6-6,0 (m, 2H) |
| 3.33 | Ethyl | Tetrahydrothio-pyran-3-yl | 4-(4-Methylphenyl)-but-2-enyl | 2,3 (s,3H); 4,5 (d,2H); 5,6-6,0 (m,2H) |
| 3.34 | Ethyl | Tetrahydrothio-pyran-3-yl | 4-(4-Chlorphenyl)-but-3-enyl | 4,2 (t, 2H); 6,1-6,5 (m, 2H) |
| 3.35 | Ethyl | Tetrahydrothio-pyran-3-yl | 4-(4-Methylphenyl)-but-3-enyl | 2,3 (s,3H); 4,2 (t,2H); 6,0-6,5 (m, 2H) |
| 3.36 | Ethyl | Tetrahydrothio-pyran-3-yl | 4-(4-Fluorphenyl)-but-3-enyl | 4,2 (t, 2H); 6,0-6,5 (m, 2H) |
| 3.37 | Ethyl | Tetrahydrothio-pyran-3-yl | 4-Phenylbut-3-enyl | 4,2 (t, 2H); 6,1-6,6 (m, 2H) |
| 3.38 | Propyl | Tetrahydrothio-pyran-3-yl | 4-Phenylbut-3-enyl | 4,2 (t, 2H); 6,1-6,6 (m, 2H) |
| 3.39 | Ethyl | Tetrahydropyran-3-yl | 4-(3-Chlorphenyl)-but-2-enyl | 4,5 (d, 2H); 5,6-6,0 (m, 2H) |
| 3.40 | Ethyl | Tetrahydropyran-3-yl | 4-Phenylbut-3-enyl | 4,2 (t, 2H); 6,1-6,6 (m, 2H) |
| 3.41 | Propyl | Tetrahydropyran-3-yl | 4-Phenylbut-3-enyl | 4,2 (t, 2H); 6,0-6,6 (m, 2H) |
| 3.42 | Ethyl | Tetrahydropyran-4-yl | 4-Phenylbut-3-enyl | 4,2 (t, 2H); 6,1-6,6 (m, 2H) |
| 3.43 | Propyl | Tetrahydropyran-4-yl | 4-Phenylbut-3-enyl | 4,2 (t, 2H); 6,1-6,6 (m, 2H) |
| 3.44 | Propyl | 3,4-Dibromtetrahydro-thiopyran-3-yl | 4-(4-Trifluormethylphenyl)-but-2-enyl | 3,5 (d, 2H); 7,55 (d, 2H) |

*) ausgewälte Signale

Tabelle 3 (Fortsetzung)

| Nr. | $R^1$ | $R^2$ | W | phys. Daten [Fp. (°C); NMR*) (δ in ppm)] |
|---|---|---|---|---|
| 3.45 | Propyl | 3,4-Dibromtetrahydro-pyran-3-yl | 4-(4-Fluorphenyl)-but-3-enyl | 4,15 (t,2H); 5,9-6,2 (m,1H); 6,4 (d,1H) |
| 3.46 | Propyl | 3,4-Dibromtetrahydro-pyran-3-yl | 4-(4-Fluorphenyl)-but-2-enyl | 4,49 (d, 2H); 5,5-6,1 (m, 2H) |
| 3.47 | Propyl | 3,4-Dibromtetrahydro-pyran-3-yl | 4-(4-t.-Butylphenyl)-but--2-enyl | 4,49 (d, 2H); 5,55-6,1 (m, 2H) |
| 3.48 | Propyl | 3,4-Dibromtetrahydro-pyran-3-yl | 4-(4-Methylphenyl)-but-2-enyl | 4,49 (d, 2H); 5,55-6,1 (m, 2H) |
| 3.49 | Propyl | 3,4-Dibromtetrahydro-pyran-3-yl | 4-(4-Trifluormethylphenyl)-but-2-enyl | 4,52 (s, 2H); 5,5-6,1 (m, 2H) |
| 3.50 | Propyl | 3,4-Dibromtetrahydro-pyran-3-yl | 4-(3-Chlorphenyl)-but-2-enyl | 4,5 (d, 2H); 5,5-6,1 (m, 2H) |
| 3.51 | Propyl | 3,4-Dibromtetrahydro-pyran-3-yl | 4-(4-Methylphenyl)-but-3-enyl | 4,18 (t,2H); 6,0-6,2 (m,1H); 6,45 (d,1H) |
| 3.52 | Propyl | 4-Methylcyclohex-3-enyl | 4-(4-Trifluormethylphenyl)-but-2-enyl | 4,05 (m, 2H); 5,5-6,1 (m, 2H) |
| 3.53 | Propyl | 4-Methylcyclohex-3-enyl | 4-(4-Fluormethyl)-but-2-enyl | 4,5 (d, 2H); 5,5-6,1 (m, 2H) |

*) ausgewälte Signale

Tabelle 3 (Fortsetzung)

| Nr. | $R^1$ | $R^2$ | W | phys. Daten [Fp. (°C); NMR*) (δ in ppm)] |
|---|---|---|---|---|
| 3.54 | Propyl | Tetrahydrothiopyran-3-yl | 4-(4-Methoxyphenyl)but-2-enyl | 3,8 (s,3H); 4,4 (d,2H); 5,5-6,0 (m,2H) |
| 3.55 | Ethyl | Tetrahydrothiopyran-3-yl | 4-(4-Methoxyphenyl)but-2-enyl | 3,8 (s,3H); 4,5 (d,2H); 5,6-6,0 (m,2H) |
| 3.56 | Propyl | Tetrahydropyran-3-yl | 4-(4-Methoxyphenyl)but-2-enyl | 3,8 (s,3H); 4,5 (d,2H); 5,6-6,0 (m,2H) |
| 3.57 | Ethyl | Tetrahydropyran-3-yl | 4-(4-Methoxyphenyl)but-2-enyl | 3,8 (s,3H); 4,5 (d,2H); 5,6-6,0 (m,2H) |
| 3.58 | Propyl | Tetrahydropyran-4-yl | 4-(4-Methoxyphenyl)but-2-enyl | 3,8 (s,3H); 4,4 (d,2H); 5,5-6,0 (m,2H) |
| 3.59 | Ethyl | Tetrahydropyran-4-yl | 4-(4-Methoxyphenyl)but-2-enyl | 3,8 (s,3H); 4,5 (d,2H); 5,5-6,0 (m,2H) |
| 3.60 | Ethyl | Tetrahydrothiopyran-3-yl | Z-4-Phenylbut-2-enyl | 4,7 (d,2H); 5,8-6,0 (m,2H) |
| 3.61 | Propyl | Tetrahydrothiopyran-3-yl | Z-4-Phenylbut-2-enyl | 4,7 (d,2H); 5,8-6,0 (m,2H) |
| 3.62 | Propyl | Tetrahydropyran-3-yl | Z-4-Phenylbut-2-enyl | 4,7 (d,2H); 5,8-6,0 (m,2H) |
| 3.63 | Propyl | Tetrahydropyran-4-yl | Z-4-Phenylbut-2-enyl | 4,7 (d,2H); 5,8-6,0 (m,2H) |
| 3.64 | Ethyl | Tetrahydropyran-4-yl | Z-4-Phenylbut-2-enyl | 4,7 (d,2H); 5,8-6,0 (m,2H) |
| 3.65 | Propyl | Tetrahydrothiopyran-3-yl | 4-(4-Methylphenyl)but-2-enyl | 2,3 (s,3H); 4,5 (d,2H); 5,6-6,0 (m,2H) |
| 3.66 | Propyl | Tetrahydrothiopyran-3-yl | 4-(3-Chlorphenyl)but-2-enyl | 4,5 (d,2H); 5,6-6,0 (m,2H) |
| 3.67 | Propyl | Tetrahydrothiopyran-3-yl | 4-(3,4-Dichlorphenyl)but-2-enyl | 4,5 (d,2H); 5,6-6,0 (m,2H) |
| 3.68 | Ethyl | Tetrahydrothiopyran-3-yl | 4-(3,4-Dichlorphenyl)but-2-enyl | 4,5 (d,2H); 5,6-6,0 (m,2H) |
| 3.69 | Propyl | Tetrahydropyran-3-yl | 4-(3,4-Dichlorphenyl)but-2-enyl | 4,5 (d,2H); 5,6-6,0 (m,2H) |

*) ausgewälte Signale

Tabelle 3 (Fortsetzung)

| Nr. | $R^1$ | $R^2$ | W | phys. Daten [Fp. (°C); NMR*) (δ in ppm)] |
|---|---|---|---|---|
| 3.70 | Propyl | Tetrahydropyran-4-yl | 4-(3,4-Dichlorphenyl)but-2-enyl | 4,5 (d,2H); 5,6-6,0 (m,2H) |
| 3.71 | Propyl | Tetrahydrothiopyran-3-yl | 4-(4-Bromphenyl)but-3-enyl | 4,2 (t,2H); 6,2 (dt,1H); 6,4 (d,1H) |
| 3.72 | Ethyl | Tetrahydrothiopyran-3-yl | 4-(4-Bromphenyl)but-3-enyl | 4,2 (t,2H); 6,2 (dt,1H); 6,4 (d,1H) |
| 3.73 | Propyl | Tetrahydrothiopyran-3-yl | 4-(4-Fluorphenyl)but-3-enyl | 4,6 (t,2H); 6,1 (dt,1H); 6,6 (d,1H) |
| 3.74 | Propyl | Tetrahydrothiopyran-3-yl | 4-(4-Chlorphenyl)but-3-enyl | 4,2 (t,2H); 6,1-6,5 (2m, 2H) |
| 3.75 | Propyl | Tetrahydrothiopyran-3-yl | 4-(4-Methylphenyl)but-3-enyl | 4,2 (t,2H); 6,1-6,2 (m,2H); 6,6 (d,1H) |
| 3.76 | Propyl | Tetrahydropyran-3-yl | 4-(4-Bromphenyl)but-3-enyl | 4,2 (t,2H); 6,0-6,4 (2m,2H) |
| 3.77 | Propyl | Tetrahydropyran-4-yl | 4-(4-Bromphenyl)but-3-enyl | 4,2 (t,2H); 6,0-6,5 (2m,2H) |
| 3.78 | Ethyl | Tetrahydropyran-4-yl | 4-(4-Bromphenyl)but-3-enyl | 4,2 (t,2H); 6,0-6,5 (2m,2H) |

*) ausgewälte Signale

Tabelle 4

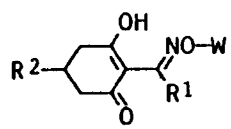

| Nr. | $R^1$ | $R^2$ | W | phys. Daten [Fp (°C); NMR*) (δ in ppm)] |
|---|---|---|---|---|
| 4.01 | Ethyl | Phenyl | 4-Phenyl-but-2-enyl | 4,5 (d, 2H); 5,6-6,0 (m, 2H) |
| 4.02 | Propyl | Phenyl | 4-Phenyl-but-2-enyl | 4,5 (d, 2H); 5,6-6,0 (m, 2H) |
| 4.03 | Ethyl | 4-Trifluormethylphenyl | 4-Phenyl-but-2-enyl | 4,5 (d, 2H); 5,6-6,1 (m, 2H) |
| 4.04 | Propyl | 4-Trifluormethylphenyl | 4-Phenyl-but-2-enyl | 56-57 |
| 4.05 | Ethyl | 4-Ethylphenyl | 4-Phenyl-but-2-enyl | 4,5 (d, 2H); 5,6-6,1 (m, 2H) |
| 4.06 | Ethyl | 4-N-Benzoylaminophenyl | 4-Phenyl-but-2-enyl | 103-105 |
| 4.07 | Propyl | 4-Ethoxyphenyl | 4-Phenyl-but-2-enyl | 4,6 (d, 2H); 5,6-6,1 (m, 2H) |
| 4.08 | Propyl | 3-Fluor-4-(N-benzoyl-amino)-phenyl | 4-Phenyl-but-2-enyl | 87-90 |
| 4.09 | Ethyl | 4-Pyridyl | 4-Phenyl-but-2-enyl | 4,5 (d,2H); 5,6-6,2 (m,2H) |
| 4.10 | Propyl | 3-Pyridyl | 4-Phenyl-but-2-enyl | 4,6 (d,2H); 5,6-6,2 (m,2H) |
| 4.11 | Ethyl | 4-(Propinyl-3-oxy)phenyl | 4-Phenyl-but-2-enyl | 4,6 (d,2H); 5,6-6,1 (m,2H) |
| 4.12 | Propyl | 4-Ethylphenyl | 4-Phenyl-but-2-enyl | 4,5 (d,2H); 5,6-6,1 (m,2H) |

*) ausgewälte Signale

Tabelle 5

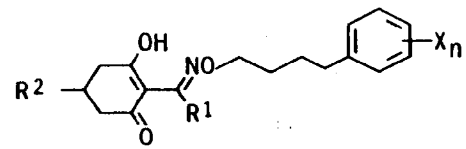

| Nr. | R1 | R2 | $X_n$ | phys. Daten [NMR*) (δ in ppm)] |
|---|---|---|---|---|
| 5.01 | Ethyl | Tetrahydropyran-3-yl | 4-Fluor | 2.9 (breit, 2H); 4.1 (breit, 2H) |
| 5.02 | Propyl | Tetrahydropyran-3-yl | 4-Fluor | 2.9 (t, 2H); 4.05 (breit, 2H) |
| 5.03 | Ethyl | Tetrahydrothiopyran-3-yl | 4-Fluor | 2.9 (t, 2H); 4.05 (breit, 2H) |
| 5.04 | Propyl | Tetrahydrothiopyran-3-yl | 4-Fluor | 2.9 (t, 2H); 4.05 (breit, 2H) |
| 5.05 | Ethyl | Tetrahydropyran-4-yl | 4-Fluor | 4.05 (breit, 2H) |
| 5.06 | Propyl | Tetrahydropyran-4-yl | 4-Fluor | 4.05 (breit, 2H) |
| 5.07 | Ethyl | Tetrahydropyran-3-yl | 4-Cl | 2.9 (t, 2H); 4.05 (breit, 2H) |
| 5.08 | Propyl | Tetrahydropyran-3-yl | 4-Cl | 2.9 (t, 2H); 4.05 (breit, 2H) |
| 5.09 | Ethyl | Tetrahydropyran-4-yl | 4-Cl | 2.9 (t, 2H); 4.05 (breit, 2H) |
| 5.10 | Propyl | Tetrahydropyran-4-yl | 4-Cl | 2.9 (breit, 2H); 4.05 (breit, 2H) |
| 5.11 | Ethyl | Tetrahydrothiopyran-3-yl | 4-Cl | 4.05 (breit, 2H) |
| 5.12 | Propyl | Tetrahydrothiopyran-3-yl | 4-Cl | 4.05 (breit, 2H) |

*) ausgewälte Signale

Tabelle 6

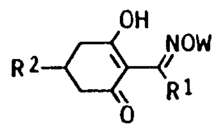

| Nr. | $R^1$ | $R^2$ | W | phys. Daten [NMR*) (δ in ppm)] |
|---|---|---|---|---|
| 6.01 | Ethyl | 3,4-Dihydroxycyclohexyl | 4-(4-Chlorphenyl)-but-2-enyl | 4,4-4,6 (m,2H); 5,5-6,0 (m,2H) |
| 6.02 | Ethyl | 2-Ethylthio-2-methylpropyl | 4-(4-Fluorphenyl)-but-2-enyl | 1,3 (s,6H); 4,5 (d,2H); 5,6-6,0 (m,2H) |
| 6.03 | Ethyl | 2-Ethylthio-2-methylpropyl | 4-Phenylbut-2-enyl | 1,3 (s,6H); 4,5 (d,2H); 5,5-6,1 (m,2H) |
| 6.04 | Ethyl | 2-Ethylthio-2-methylpropyl | 4-Phenylbut-3-enyl | 1,3 (s,6H); 4,2 (t,2H); 6,2 (dt,1H); 6,4 (dt,1H) |
| 6.05 | Ethyl | 2-Ethylthio-2-methylpropyl | 4-(4-Fluorphenyl)-but-3-enyl | 1,3 (s,6H); 4,2 (t,2H); 6,1 (dt,1H); 6,4 (dt,1H) |
| 6.06 | Ethyl | 2-Ethylthio-2-methylpropyl | 4-(4-Chlorphenyl)-but-3-enyl | 1,3 (s,6H); 4,2 (t,2H); 6,2 (dt,1H); 6,5 (dt,1H) |
| 6.07 | Ethyl | 2,6,6-Trimethylcyclohex--1-enyl | 4-Phenylbut-2-enyl | 1,0 (s,6H); 4,5 (d,2H); 5,8-6,2 (m,2H) |
| 6.08 | Propyl | 2,6,6-Trimethylcyclohex--1-enyl | 4-Phenylbut-2-enyl | 1,0 (s,6H); 4,5 (d,2H); 5,6-6,1 (m,2H) |

*) ausgewälte Signale

Tabelle 7

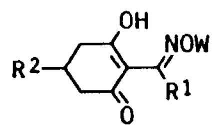

| Nr. | R1 | R2 | W | phys. Daten [NMR*) (δ in ppm)] |
|---|---|---|---|---|
| 7.01 | Propyl | Tetrahydrothiopyran-3-yl | 4-(4-Fluorphenyl)-pent-3-enyl | 2,0 (s,3H); 4,1 (t,2H); 5,7 (t,1H) |
| 7.02 | Ethyl | Tetrahydrothiopyran-3-yl | 4-(4-Fluorphenyl)-pent-3-enyl | 2,0 (s,3H); 4,1 (t,2H); 5,7 (t,1H) |
| 7.03 | Propyl | Tetrahydropyran-3-yl | 4-(4-Fluorphenyl)-pent-3-enyl | 2,0 (s,3H); 4,1 (t,2H); 5,7 (t,1H) |
| 7.04 | Propyl | Tetrahydropyran-4-yl | 4-(4-Fluorphenyl)-pent-3-enyl | 2,0 (s,3H); 4,1 (t,2H); 5,7 (t,1H) |
| 7.05 | Ethyl | Tetrahydropyran-4-yl | 4-(4-Fluorphenyl)-pent-3-enyl | 2,0 (s,3H); 4,1 (t,2H); 5,7 (t,1H) |

*) ausgewälte Signale

Synthesebeispiele für Naphthaline der Formel I

Beispiel 8.008

2-Benzoylaminonaphthalin-1-carbonitril

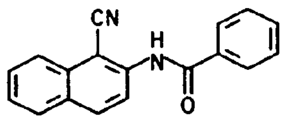

3,0 g (17,8 mmol) 2-Aminonaphthalin-1-carbonitril (Chem. Pharm. Bull. 33 (4), 1360-1366 (1985)) wurden mit 2,5 g (18,1 mmol) Benzoylchlorid und 4 ml Triethylamin in 100 ml Toluol 15 Stunden bei 80°C gerührt. Nach beendeter Reaktion wurde das Produkt abfiltriert und getrocknet. Man erhielt so 1,5 g (31 % d. Th.) der Titelverbindung vom Fp. 205°C.

Beispiel 9.010

1-(N-Phthalimido)naphthalin-2-carbonitril

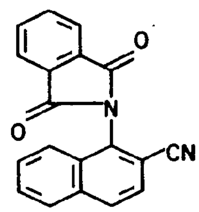

3,0 g (17,9 mmol) 1-Aminonaphthalin-2-carbonitril (Chem. Pharm. Bull. 33 (4), 1360-1366 (1985)) und 2,7 g (17,9 mmol) Phthalsäureanhydrid wurden 15 Stunden in 40 ml Essigsäure (konz.) zum Sieden erhitzt. Nach beendeter Umsetzung wurde die Reaktionsmischung in 200 ml Wasser eingerührt, der Niederschlag isoliert und getrocknet. Man erhielt so 3,5 g (66 % d. Th.) der Titelverbindung vom Fp. 196°C.

Beispiel 9.069

5-(3-Chlorphenyl)-3-(1′-aminonapht-2′-yl)-oxadiazol

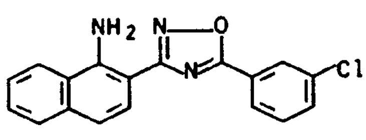

a) 1-Aminonaphthalin-2-carbonsäureamidoxim

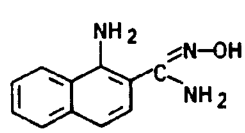

33,6 g (0,20 mol) 1-Aminonaphthalin-2-carbonitril (Chem. Pharm. Bull. 33, 1360-1366 (1985)), 18,8 g (0,27 mol) Hydroxylammoniumchlorid und 22,7 g (0,27 mol) Natriumhydrogencarbonat wurden 15 Stunden in 300 ml Ethanol/Wasser (3:2) unter Rückfluß erhitzt. Nach dem Abkühlen saugte man ab und wusch mit n-Propanol nach. Ausbeute 30,0 g (75 %) Titelverbindung vom Fp. = 178-180°C (Wirkstoffbeispiel 9.031).
b) 6,0 g (30 mmol) der unter a) erhaltenen Verbindung, 6,9 ml (50 mmol) 3-Chlorbenzoesäuremethylester und 3,2 g (60 mmol) Natriummethylat wurden in 70 ml Methanol 15 Stunden zum Sieden erhitzt. Nach

beendeter Umsetzung wurde in 500 ml Wasser eingerührt, das ausgefallene Produkt abfiltriert und getrocknet. Man erhielt so 5,4 g (56 % d. Th.) der Titelverbindung vom Fp. = 160°C (Wirkstoffbeispiel 9.069).

Beispiel 8.001

2-Chlornaphthalin-1-carbonitril

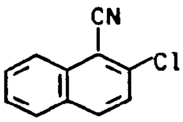

33,6 g (0,2 mol) 2-Aminonaphthalin-1-carbonitril (s. Beispiel 1) in 250 ml (abs.) Acetonitril wurden bei 65°C zu einer Suspension von 32,3 g (0,24 mol) Kupfer(II)chlorid (wasserfrei) und 30,9 g (0,3 mol) t-Butylnitrit in 800 ml (abs.) Acetonitril gegeben. Nach beendeter Gasentwicklung wurde die abgekühlte Reaktionsmischung mit 2000 ml 20%iger Salzsäure versetzt, der Niederschlag isoliert, gewaschen und getrocknet. Man erhielt so 31,7 g (70 % d. Th.) der Titelverbindung vom Fp. = 82-83°C.

Tabelle 8

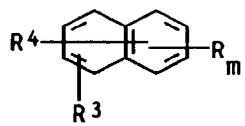

| Nr. | $R^3$ | $R^4$ | $R_m$ | Fp [°C] | Literatur |
|---|---|---|---|---|---|
| 8.001 | 1-CN | 2-Cl | - | 98 - 99 | Chem. Ber. 83, 171 (1950) |
| 8.002 | 1-CN | 2-Br | - | 85 - 86 | |
| 8.003 | 1-CN | $2-NH_2$ | - | 122 | Chem. Pharm. Bull 33, 1360 (1985) |
| 8.004 | 1-CN | $2-NH_2$ | $6-OCH_3$ | | J. Org. Chem. 33, 1719 (1968) |
| 8.005 | 1-CN | $2-NHCOCH_3$ | - | 164 | Monatsh. Chem. 89, 358 (1958) |
| 8.006 | 1-CN | $2-N(COCH_3)_2$ | - | 111-113 | wie 8.005 |
| 8.007 | 1-CN | $2-NHCO(CH_2)_2CO_2H$ | - | 204 | |
| 8.008 | 1-CN | 2-NHCOPh | - | 205 | |
| 8.009 | 1-CN | 2-NHCONHPh | - | 270 | |
| 8.010 | 1-CN | $2-NHCOCO_2CH_2CH_3$ | - | 162 | wie 8.003 |
| 8.011 | 1-CN | 2-N=CHPh | - | 112-113 | wie 8.005 |
| 8.012 | 1-CN | 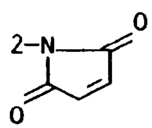 | - | 148 | |
| 8.013 | 1-CN | 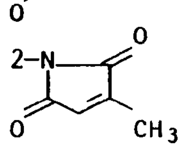 | - | 96 | |

Tabelle 8 - Fortsetzung -

| Nr. | $R^3$ | $R^4$ | $R_m$ | Fp [°C] | Literatur |
|---|---|---|---|---|---|
| 8.014 | 1-CN | 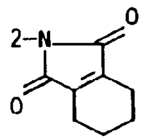 | - | 83 | |
| 8.015 | 1-CN | 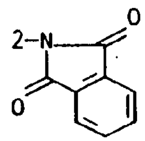 | - | 139 | |
| 8.016 | 1-CN | 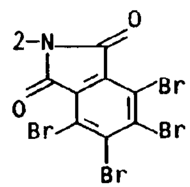 | - | >260 | |
| 8.017 | 1-CN | $3-NH_2$ | - | 116-118 | Bull. Soc. Chim. Fr. 234 (1954) |
| 8.018 | 1-CN | $3-NHCOCH_3$ | - | 260 | wie 8.017 |
| 8.019 | 1-CN | 4-Cl | - | 110 | Chem. Ber. 28, 1840 |
| 8.020 | 1-CN | $4-NH_2$ | - | 174 | Ber. Dts. Chem. Ges. 28, 1842 |
| 8.021 | 1-CN | $4-NH_2$ | $2-CH_3$ | 188 | J. Am. Chem. Soc. 78, 4774 (1956) |
| 8.022 | 1-CN | $4-NH_2$ | $3-NO_2$ | 239,5 | CA 3353 (1956) |
| 8.023 | 1-CN | $4-NHCOCH_3$ | - | 189,5 | wie 8.022 |
| 8.024 | 1-CN | $4-NHCOCH_3$ | $3-NO_2$ | 270,5 | wie 8.022 |
| 8.025 | 1-CN | $4-NHSO_2Ph$ | $3-CH_3$ | 183-184 | J. Am. Chem. Soc. 79, 170 (1957) |
| 8.026 | 1-CN | $4-NHSO_2Ph$<br>$CH_2CO_2H$ | $3-CH_3$ | 195,5-196,5 | wie 8.025 |

Tabelle 8 - Fortsetzung -

| Nr. | $R^3$ | $R^4$ | $R_m$ | Fp [°C] | Literatur |
|---|---|---|---|---|---|
| 8.027 | 1-CN | 5-Cl | - | 148 | J. Chem. Soc. P.T.I. 2779 (1979) |
| 8.028 | 1-CN | 5-Br | - | 147 | Chem. Ber. 9, 1516 |
| 8.029 | 1-CN | $5-NH_2$ | - | 139-140 | a) J. Chem. Soc. 678 (1954)979)<br>b) J. Am. Chem. Soc. 63, 828 (1941) |
| 8.030 | 1-CN | $5-NHCOCH_3$ | - | | |
| 8.031 | 1-CN | 5-NHCOPh | - | 211-212 | Helv. Chim. Acta 8, 8419 (1979) |
| 8.032 | 1-CN | 6-Cl | - | | |
| 8.033 | 1-CN | 6-Br | - | | |
| 8.034 | 1-CN | $6-NH_2$ | - | | |
| 8.035 | 1-CN | 7-Cl | - | | |
| 8.036 | 1-CN | 7-Br | - | | |
| 8.037 | 1-CN | $7-NH_2$ | - | | |
| 8.038 | 1-CN | 8-Cl | - | 145 | wie 8.027 |
| 8.039 | 1-CN | 8-Br | - | | |
| 8.040 | 1-CN | $8-NH_2$ | - | 88 | Bull. Soc. Chim. Fr. 1561 (1972) |
| 8.041 | $1-CONH_2$ | 2-Cl | - | 144 | |
| 8.042 | $1-CONH_2$ | 2-Br | - | | |
| 8.043 | $1-CONH_2$ | $2-NH_2$ | - | | |
| 8.044 | $1-CONH_2$ | 5-Br | - | 240-241 | wie 8.028 |
| 8.045 | $1-CONH_2$ | $5-NH_2$ | - | | |
| 8.046 | $1-CONH_2$ | 8-Cl | - | | |

Tabelle 8 - Fortsetzung -

| Nr. | $R^3$ | $R^4$ | $R_m$ | Fp [°C] | Literatur |
|---|---|---|---|---|---|
| 8.047 | 1-$CONH_2$ | 8-$NH_2$ | - | 233 | wie 8.040 |
| 8.048 | 1-$CSNH_2$ | 2-Cl | - | | |
| 8.049 | 1-$CSNH_2$ | 2-Br | - | | |
| 8.050 | 1-$CSNH_2$ | 2-$NH_2$ | - | | J. Prakt. Chem. 319, 65 (1977) |
| 8.051 | 1-$CO_2H$ | 2-Cl | - | | |
| 8.052 | 1-$CO_2H$ | 2-$NH_2$ | - | | |
| 8.053 | 1-$CO_2H$ | 3-Cl | - | 223 | J. Chem. Soc. 1426 (1958) |
| 8.054 | 1-$CO_2H$ | 3-$NH_2$ | - | 179 | Chem. Ber. 90, 2876 (1957) |
| 8.055 | 1-$CO_2H$ | 4-Br | - | 221 | wie 8.053 |
| 8.056 | 1-$CO_2H$ | 4-$NH_2$ | - | 177 | Z. Obsc. Chim. 231, 1028 (1953) |
| 8.057 | 1-$CO_2H$ | 4-$N(CH_3)_2$ | - | 161 | J. Chem. Soc. 1310 (1959) |
| 8.058 | 1-$CO_2H$ | 5-Cl | - | | |
| 8.059 | 1-$CO_2H$ | 5-Cl | 8-$NO_2$ | 224-225 | J. Prakt. Chem. 38, 155 |
| 8.060 | 1-$CO_2H$ | 5-Br | - | 242 | wie 8.059 |
| 8.061 | 1-$CO_2H$ | 5-Br | 8-$NO_2$ | 260 | wie 8.059 |
| 8.062 | 1-$CO_2H$ | 5-$NH_2$ | - | 212-213 | J. Chem. Soc. 991 (1950) |
| 8.063 | 1-$CO_2H$ | 7-Cl | - | | |
| 8.064 | 1-$CO_2H$ | 7-$NH_2$ | - | 228-229 | J. Org. Chem. 13, 164 (1948) |
| 8.065 | 1-$CO_2H$ | 7-$NHCOCH_3$ | - | 237-238 | wie 8.064 |
| 8.066 | 1-$CO_2H$ | 8-Cl | - | | |

Tabelle 8 - Fortsetzung -

| Nr. | $R^3$ | $R^4$ | $R_m$ | Fp [°C] | Literatur |
|---|---|---|---|---|---|
| 8.067 | 1–$CO_2H$ | 8-Br | - | | |
| 8.068 | 1–$CO_2H$ | 8-$NH_2$ | 5-Br | 250 | Helv. Chim. Acta <u>15</u>, 1366 (1932) |
| 8.069 | 1–$CO_2CH_2CH_3$ | 3-Cl | - | | |
| 8.070 | 1–$CO_2CH_2CH_3$ | 3-Br | - | 28 | wie 8.053 |
| 8.071 | 1–$CO_2CH_3$ | 4-F | - | $Kp_{20}$= 123 | J. Chem. Soc. 310 (1959) |
| 8.072 | 1–$CO_2CH_2CH_3$ | 4-F | - | | |
| 8.073 | 1–$CO_2CH_2CH_3$ | 4-$NH_2$ | - | | |
| 8.074 | 1–$CO_2CH_2CH_3$ | 4-$N(CH_3)_2$ | - | $Kp_1$ = 152 | wie 8.057 |
| 8.075 | 1–$CO_2(CH_2)_2NHC_3H_7$ | 4-$NH_2$ | - | 208 | Z. Obsc. Chim. <u>22</u>, 328 (1952) |
| 8.076 | 1–$CO_2H$ | 2–$CO_2H$ | 6–$CH_3$ | | |
| 8.077 | 1–$CO_2H$ | 2–OH | 6–$CH_3$ | | |
| 8.078 | 1–$CO_2H$ | 5–OH | 2–Cl, 6–$CH_3$ | | |
| 8.079 | 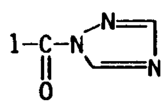 | H | 2,7–$Cl_2$ | | |
| 8.080 | 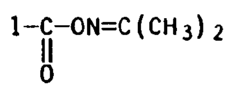 | H | 2,7–$Cl_2$ | | |
| 8.081 | 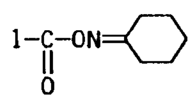 | H | 2,7–$Cl_2$ | 155-158 | |

Tabelle 8 - Fortsetzung -

| Nr. | $R^3$ | $R^4$ | $R_m$ | Fp [°C] | Literatur |
|---|---|---|---|---|---|
| 8.082 | 1-CN | 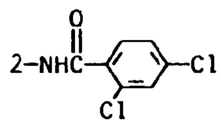 | - | 134-136 | |
| 8.083 | $1-CO_2H$ | 4-Cl | - | | DE-A 20 28 255 |
| 8.084 | $1-CO_2H$ | 2-Cl | 6-Cl | 150-152 | |
| 8.085 | $1-CO_2CH_3$ | 2-Cl | 6-Cl | | |
| 8.086 | $1-(CO_2-n-C_4H_9)$ | 2-Cl | 6-Cl | Öl | |
| 8.087 | $1-(CO_2-n-C_6H_{13})$ | 2-Cl | 6-Cl | 51- 53 | |
| 8.088 | $1-CO_2H$ | 2-Cl | $6-CH_3$ | 188-190 | |
| 8.089 | $1-CO_2H$ | 2-Cl | $5-NO_2$, 6-Cl | 179 | |
| 8.090 | 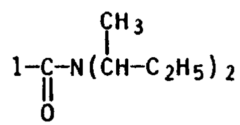 | 4-Cl | - | Öl | DE-A 20 28 555 |
| 8.091 | 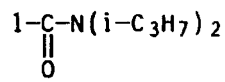 | 4-Cl | - | | DE-A 20 28 555 |
| 8.092 | 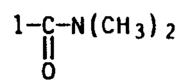 | 2-Cl | 6-Cl | 139-142 | |
| 8.093 | 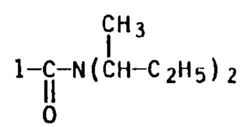 | 2-Cl | 6-Cl | | |
| 8.094 | 1-CN | 2-OH | - | 160-161 | |

Tabelle 9

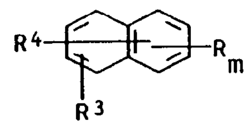

| Nr. | $R^3$ | $R^4$ | $R_m$ | Fp [°C] | Literatur |
|---|---|---|---|---|---|
| 9.001 | 2-CN | 1-Cl | - | 101-102 | |
| 9.002 | 2-CN | 1-Br | - | 85-86 | |
| 9.003 | 2-CN | 1-Br | 6-Br | 178 | wie 8.053 |
| 9.004 | 2-CN | $1-NH_2$ | - | 109 | wie 8.040, 8.003 |
| 9.005 | 2-CN | $1-NH_2$ | $3-CH_2Ph$ | | |
| 9.006 | 2-CN | $1-NHCOCH_3$ | - | 219.5-220.5 | Rec. Trav. Chim. Pays-Bas 76, 401 (1957) |
| 9.007 | 2-CN | 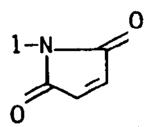 | - | >260 | |
| 9.008 | 2-CN | 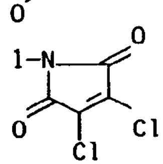 | - | 222 | |
| 9.009 | 2-CN | 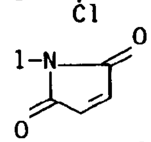 | - | 186 | |
| 9.010 | 2-CN | 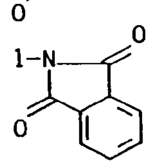 | - | 196 | |

Tabelle 9 - Fortsetzung -

| Nr. | $R^3$ | $R^4$ | $R_m$ | Fp [°C] | Literatur |
|---|---|---|---|---|---|
| 9.011 | 2-CN | $3-NH_2$ | - | 163-164 | Bull. Soc. Chim. Fr. 743 (1954) |
| 9.012 | 2-CN | $3-NH_2$ | 4-Br | 154-155 | wie 8.050 |
| 9.013 | 2-CN | 3-Cl | - | | |
| 9.014 | 2-CN | 3-Br | - | | |
| 9.015 | 2-CN | 4-Cl | - | | |
| 9.016 | 2-CN | 4-Br | - | | |
| 9.017 | 2-CN | $4-NH_2$ | - | 125-126 | wie 8.029b) |
| 9.018 | 2-CN | 5-Cl | - | 142<br>144 | wie 8.027<br>J. Prakt. Chem. 43, 412 |
| 9.019 | 2-CN | 5-Cl | 8-Cl | 140 | wie 8.053 |
| 9.020 | 2-CN | $5-NH_2$ | - | 143-144 | wie 8.029b) |
| 9.021 | 2-CN | 6-Cl | - | | |
| 9.022 | 2-CN | $6-NH_2$ | - | 199 | wie 8.029b) |
| 9.023 | 2-CN | 7-Cl | - | | |
| 9.024 | 2-CN | 7-Br | - | | |
| 9.025 | 2-CN | $7-NH_2$ | - | 197 | wie 8.029a) |
| 9.026 | 2-CN | 8-Cl | - | 112-113 | wie 8.027 |
| 9.027 | 2-CN | 8-Br | - | | |
| 9.028 | 2-CN | $8-NH_2$ | - | 133 | DRP 92 995 |
| 9.029 | $2-C(NH_2)=NOH$ | 1-Cl | - | | |

Tabelle 9 - Fortsetzung -

| Nr. | $R^3$ | $R^4$ | $R_m$ | Fp [°C] | Literatur |
|---|---|---|---|---|---|
| 9.030 | 2-C($NH_2$)=NOH | 1-Br | - | | |
| 9.031 | 2-C($NH_2$)=NOH | 1-$NH_2$ | - | 164-166 | |
| 9.032 | 2-$CONH_2$ | 1-Cl | - | 144 | |
| 9.033 | 2-$CONH_2$ | 1-Br | - | | |
| 9.034 | 2-$CONH_2$ | 1-$NH_2$ | - | 107-108<br>191-192 | a) wie 8.050<br>b) Chem. Ber. 98, 2556 (1965) |
| 9.035 | 2-$CONH_2$ | 3-Cl | - | | |
| 9.036 | 2-$CONH_2$ | 3-$NH_2$ | - | 234-236 | a) wie 8.040<br>b) Liebigs Am. Chem. 516, 248 (1935) |
| 9.037 | 2-$CONH_2$ | 3-$NH_2$ | 4-Br | | wie 8.050 |
| 9.038 | 2-$CONH_2$ | 3-$NHCOCH_3$ | - | 240 | wie 9.036 |
| 9.039 | 2-$CONHCH_2Ph$ | 3-$NH_2$ | - | 210 | DRP 514 596 (1928) |
| 9.040 | 2-CON(Ph)$CH_3$ | 3-$NH_2$ | - | 165 | wie 9.039 |
| 9.041 | 2-$CONH_2$ | 5-Cl | - | 186-187 | wie 9.018 |
| 9.042 | 2-$CONH_2$ | 5-Cl | 8-Cl | 218 | wie 8.053 |
| 9.043 | 2-$CONH_2$ | 5-$NH_2$ | - | | |
| 9.044 | 2-$CSNH_2$ | 1-Cl | - | | |
| 9.045 | 2-$CSNH_2$ | 1-$NH_2$ | - | 193-194 | wie 8.050 |
| 9.046 | 2-$CSNH_2$ | 3-Cl | - | | |
| 9.047 | 2-$CSNH_2$ | 3-$NH_2$ | - | 182-187 (Zers.) | wie 8.050 |
| 9.048 | 2-$CO_2H$ | 1-F | - | | |

Tabelle 9 - Fortsetzung -

| Nr. | $R^3$ | $R^4$ | $R_m$ | Fp [°C] | Literatur |
|---|---|---|---|---|---|
| 9.049 | $2-CO_2H$ | 1-Br | - | 160-161 | |
| 9.050 | $2-CO_2H$ | $1-NH_2$ | - | 203-205 | wie 8.056 |
| 9.051 | $2-CO_2H$ | 3-F | 4-Br | 235-236 | Chem. Ber. 92, 1999 (1952) |
| 9.052 | $2-CO_2H$ | 3-Cl | - | | |
| 9.053 | $2-CO_2H$ | $3-NH_2$ | - | | |
| 9.054 | $2-CO_2H$ | 5-Cl | - | 263 | wie 9.018 |
| 9.055 | $2-CO_2H$ | 5-J | - | 254 | J. Chem. Soc. 2794 (1958) |
| 9.056 | $2-CO_2H$ | $5-NH_2$ | - | | |
| 9.057 | $2-CO_2H$ | 8-Cl | - | | |
| 9.058 | $2-CO_2H$ | 8-Br | - | | |
| 9.059 | $2-CO_2H$ | $8-NH_2$ | - | 215-216 | J. Am. Chem. Soc. 74, 3652 (1952) |
| 9.060 | $2-CO_2CH_2CH_3$ | 1-Cl | - | | |
| 9.061 | $2-CO_2CH_2CH_3$ | $1-NH_2$ | - | | |
| 9.062 | $2-CO_2CH_2CH_3$ | 3-Cl | - | | |
| 9.063 | $2-CO_2CH_2CH_3$ | $3-NH_2$ | - | 117-118 | wie 9.039 |
| 9.064 | $2-CO_2CH_2CH_3$ | 5-Cl | - | 45 | wie 9.018 |
| 9.065 | $2-CO_2CH_2CH_3$ | $5-NH_2$ | - | | |
| 9.066 | $2-CO_2CH_2CH_3$ | 8-Cl | - | 29 | wie 9.018 |
| 9.067 | $2-CO_2CH_2CH_3$ | $8-NH_2$ | - | | |

Tabelle 9 - Fortsetzung -

| Nr. | $R^3$ | $R^4$ | $R_m$ | Fp [°C] | Literatur |
|---|---|---|---|---|---|
| 9.068 | 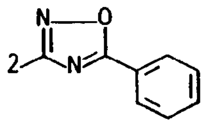 | 1-$NH_2$ | - | 132-134 | |
| 9.069 | 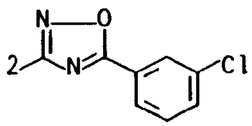 | 1-$NH_2$ | - | 160 | |
| 9.070 | 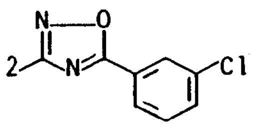 | 1-Cl | - | 160 | |
| 9.071 | 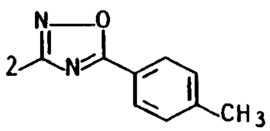 | 1-Cl | - | | |
| 9.072 | 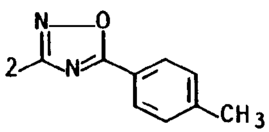 | 1-$NH_2$ | - | 141-142 | |
| 9.073 | $2-CO_2C_6H_5$ | 1-Br | - | Öl | |
| 9.074 | $2-\underset{\underset{O}{\|}}{C}-NH-n-C_4H_9$ | 1-Br | - | 118-119 | |
| 9.075 | $2-\underset{\underset{O}{\|}}{C}-N(C_2H_5)_2$ | 1-Br | - | Öl | |

Tabelle 9 - Fortsetzung -

| Nr. | $R^3$ | $R^4$ | $R_m$ | Fp [°C] | Literatur |
|---|---|---|---|---|---|
| 9.076 | $2-CO_2H$ | 6-Cl | - | 281-282 | |
| 9.077 | $2-CO_2CH_3$ | $3-NH_2$ | - | 84- 86 | |
| 9.078 | $2-CO_2CH_3$ | 6-Br | - | | |
| 9.079 | $2-\underset{\underset{O}{\|}}{C}NHC_6H_5$ | 1-Br | - | 136-145 | |

Beispiele zur biologischen Wirkung

Der Einfluß verschiedener Vertreter der erfindungsgemäßen herbiziden Mittel bzw. Mittelkombinationen, bestehend aus Herbizid und antidotisch wirkender Verbindung, auf das Wachstum von erwünschten und unerwünschten Pflanzen im Vergleich zum herbiziden Wirkstoff allein wird durch die folgenden biologischen Beispiele aus Gewächshausversuchen belegt:

Als Kulturgefäße dienen Plastikblumentöpfe mit rund 300 $cm^3$ Inhalt und lehmiger Sand mit etwa 3,0 % Humus als Substrat. Die Samen der Testpflanzen werden nach Arten getrennt, flach eingesät und befeuchtet. Danach deckt man die Gefäße mit durchsichtigen Plastikhauben ab, bis die Samen gleichmäßig gekeimt und die Pflanzen angewachsen sind.

Für die Nachauflaufbehandlung zieht man die Testpflanzen je nach Wuchsform erst bis zu einer Wuchshöhe von 3 bis 20 cm an und behandelt sie dann. Die herbiziden Mittel werden hierbei in Wasser als Verteilungsmittel suspendiert oder emulgiert und mittels fein verteilender Düsen gespritzt.

In den biologischen Beispielen wurde als Cyclohexenonderivate II die Verbindung Nr. 3.34 verwendet.

Herbizide Wirkstoffe und antidotisch wirkende Verbindungen können gemeinsam oder getrennt nach dem Auflaufen auf die Blätter und Sprosse der Kulturpflanzen und der unerwünschten Gräser ausgebracht werden. Bevorzugt wird das antidotisch wirkende Mittel gleichzeitig mit dem herbiziden Wirkstoff ausgebracht. Auch eine getrennte Ausbringung, wobei das Antidot zuerst und anschließend der herbizide Wirkstoff auf das Feld gebracht werden, ist möglich. Herbizider Wirkstoff und Antidot können hierbei als Spritzmittel in suspendierbarer, emulgierbarer oder löslicher Form gemeinsam oder getrennt formuliert vorliegen.

Denkbar ist auch eine Behandlung der Kulturpflanzensamen mit dem Antidot vor der Aussaat. Der herbizide Wirkstoff wird dann allein in der üblichen Weise appliziert.

Für das gleiche Cyclohexenonderivat II werden unterschiedliche Mengen einer antidotisch wirkenden Verbindung benötigt, wenn das Cyclohexenonderivat in verschiedenen Kulturen eingesetzt wird. Die Mengenverhältnisse, in denen ein Cyclohexenonderivat II und ein Naphthalinderivat I eingesetzt werden, sind in breiten Bereichen variabel. Sie sind abhängig von der Struktur des Cyclohexenonderivats, des Naphthalinderivats und der jeweiligen Kultur. Geeignete Anteilverhältnisse herbizider Wirkstoff: antidotisch wirkender Verbindung liegen zwischen 1 : 40 bis 1 : 0,01; vorzugsweise 1 : 4 bis 1 : 0,25 Gew.-Teile.

Die neuen herbiziden Mittel können neben dem Naphthalinderivat I als Antidot und dem Herbizid aus der Gruppe der Cyclohexenone II weitere herbizide oder wachstumsregulierende Wirkstoffe anderer chemischer Struktur enthalten, wobei der antagonistische Effekt erhalten bleibt.

Die erfindungsgemäßen Mittel bzw. bei getrennter Ausbringung die herbiziden Wirkstoffe oder das Antidot werden beispielsweise in Form von direkt versprühbaren Lösungen, Pulvern, Suspensionen, auch hochprozentige wäßrige, ölige oder sonstige Suspensionen, oder Dispersionen, Emulsionen, Öldispersionen, Pasten, Stäubemitteln, Streumitteln oder Granulaten durch Versprühen, Vernebeln, Verstäuben, Verstreuen oder Gießen angewendet. Die Anwendungsformen richten sich ganz nach den Verwendungszwecken.

Zur Herstellung von direkt versprühbaren Lösungen, Emulsionen, Pasten und Ölsdispersionen kommen Mineralölfraktionen von mittlerem bis hohem Siedepunkt, wie Kerosin oder Dieselöl, ferner Kohlenteeröle, sowie Öle pflanzlichen oder tierischen Ursprungs, aliphatische, cyclische oder aromatische Kohlenwasserstoffe, z.B. Benzol, Toluol, Xylol, Paraffin, Tetrahydronaphthalin, alkylierte Naphthaline oder deren Derivate, Methanol, Ethanol, Propanol, Butanol, Chloroform, Tetrachlorkohlenstoff, Cyclohexanol, Cyclohexanon, Chlorbenzol, Isophoron, stark polare Lösungsmittel, wie z.B. Dimethylformamid, Dimethylsulfoxid, N-Methylpyrrolidon und Wasser, in Betracht.

Wäßrige Anwendungsformen können aus Emulsionskonzentraten, Pasten oder netzbaren Pulvern (Spritzpulvern), Öldispersionen durch Zusatz von Wasser bereitet werden. Zur Herstellung von Emulsionen, Pasten oder Öldispersionen können herbizider Wirkstoff und/oder Antidot als solche oder in einem Öl oder Lösungsmittel gelöst, mittels Netz-, Haft-, Dispergier- oder Emulgiermittel in Wasser homogenisiert werden. Es können aber auch aus herbizidem Wirkstoff und/oder Antidot Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäure, Phenolsulfonsäure, Alkylarylsulfonate, Alkylsulfate, Alkylsulfonate, Alkali- und Erdalkalisalze der Dibutylnaphthalinsulfonsäure, Laurylethersulfat, Fettalkoholsulfate, fettsaure Alkali- und Erdalkalisalze, Salze sulfatierter Hexadecanole, Heptadecanole, Octadecanole, Salze von sulfatierten Fettalkoholglykolethern, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctylphenol-, Octylphenol, Nonylphenol, Alkylphenolpolyglykolether, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether, ethoxyliertes Polyoxypropylen, Laurylalkoholpolylglykoletheracetal, Sorbitester, Lignin-Sulfitablaugen und Methylcellulose in Betracht.

Pulver, Streu- und Stäubmittel können durch Mischen oder gemeinsames Vermahlen von herbizidem Wirkstoff und/oder Antidot mit einem festen Trägerstoff hergestellt werden.

Granulate, z.B. Umhüllungs-, Imprägnierungs- und Homogengranulate, können durch Bindung der Wirkstoffe an feste Trägerstoffe hergestellt werden. Feste Trägerstoffe sind z.B. Mineralerden wie Silicagel, Kieselsäuren, Kieselgele, Silikate, Talkum, Kaolin, Attaclay, Kalkstein, Kreide, Bolus, Löß, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehle, Baumrinden-, Holz- und Nußschalenmehl, Cellulosepulver und andere feste Trägerstoffe.

Die Formulierungen enthalten zwischen 0,1 und 95 Gew.-% an herbizidem Wirkstoff und Antidot, vorzugsweise zwischen 0,5 und 90 Gew.-%. Die Aufwandmengen an herbizidem Wirkstoff betragen 0,05 bis 5 kg/ha.

Der herbizide Wirkstoff II wird als 10 bis 20 gew.-%iges Emulsionskonzentrat (EC) formuliert auch allein jeweils unter Zugabe von derjenigen Menge an Lösungsmittelsystem in die Spritzbrühe eingesetzt, mit welcher die antidotisch wirkende Verbindung in den Tabellen angegebenen Aufwandmengen ausgebracht werden.

Sämtliche antidotisch wirkende Verbindungen werden in einem Gemisch, bestehend aus 80 % Lösungsmittel (Cyclohexenon) und 20 % Tensid (Emulphor® EL = ethoxyliertes Rizinusöl (caster oil)), mit 10 Gew.-% Wirkstoff aufbereitet.

Die Versuchsgefäße werden im Gewächshaus aufgestellt, wobei für wärmeliebende Arten 18 bis 35° und für solche gemäßigtere Klimate 10 bis 25° bevorzugt werden.

Die Versuchsperiode erstreckte sich über 3 bis 5 Wochen. Während dieser Zeit wurden die Pflanzen gepflegt, und ihre Reaktion auf die einzelnen Behandlungen wurde erfaßt. Bewertet wurde die Schädigung durch die chemischen Mittel anhand einer Skala von 0 % bis 100 % im Vergleich zu den unbehandelten Kontrollpflanzen. Dabei bedeutet 0 keine Schädigung und 100 eine völlige Zerstörung der Pflanzen.

Liste der Testpflanzen:

| Lat. Name | Deutscher Name | Englischer Name |
|---|---|---|
| Setaria viridis | Grüne Borstenhirse | green foxtail |
| Zea mays | Mais | Indian corn |
| Sorghum vulgare | Sorghumhirse | shattercane |

Die anschließenden Tabellen dokumentieren die antidotische Wirkung der Beispielsverbindungen Nr. 8.003 und 8.094 und die Kulturpflanzenverträglichkeit des Cyclohexenonderivates Nr. 3.34.

Tabelle 10 Verbesserte Verträglichkeit des Herbizids Nr. 3.34 bei Mais durch Zumischung der antidotisch wirksamen Verbindung Nr. 8.094 Nachauflaufwendung im Gewächshaus

| Aufwandmenge | [kg/ha a.S.] | Testpflanzen und Schädigung [%] | |
|---|---|---|---|
| Herbizid | Antidot | Kulturpflanze | unerwünschte Pflanze |
| Nr. 3.34 | Nr. 8.094 | Zea mays | Setaria viridis |
| 0,25 | - | 85 | 100 |
| 0,25 | 0,75 | 10 | 98 |

Tabelle 11 Verbesserung der Verträglichkeit des Herbizids 3.34 für Mais und Kulturhirse durch Zumischen der antidotisch wirksamen Verbindungen 8.003 bzw. 8.094 bei Nachauflaufanwendung im Gewächshaus

| Aufwandmenge [kg/ha a.S.] Herbizid Nr. 3.34 | Antidot | Antidot Nr. | Testpflanzen und Schädigung [%] Kulturpflanze Zea mays | Sorghum vulg. | unerwünschte Pflanze Setaria viridis |
|---|---|---|---|---|---|
| 0,25 | - | - | 90 | 100 | 100 |
| 0,25 | 0,75 | 8.003 | 10 | 20 | 100 |
| 0,25 | 0,75 | 8.094 | 20 | 65 | 98 |

**Patentansprüche**

1. Herbizide Mittel, enthaltend mindestens ein Naphthalinderivat der Formel I,

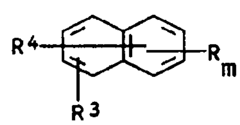

I

in der die Substituenten und der Index folgende Bedeutung haben:

R $C_1$-$C_4$-Alkyl, $C_1$-$C_4$-Alkylthio, $C_1$-$C_4$-Halogenalkyl, $C_1$-$C_4$-Alkoxy, Halogen, Hydroxy, Nitro oder Benzyl;

m 0, 1, 2 oder 3, wobei die Reste R verschieden sein können, wenn m 2 oder 3 bedeutet;

$R^3$ -CN; -C($NH_2$)NOH; -C(Z)T$R^5$;

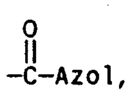, 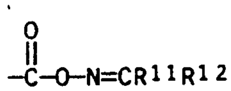 oder 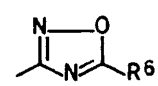 ;

$R^4$ Halogen; -$NR^7R^8$; -N=CH-$R^7$; -$NR^7$-$SO_2R^9$; $COOR^5$; OH

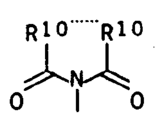 oder 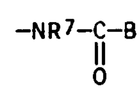

und

Z Sauerstoff oder Schwefel;

T Sauerstoff oder -$NR^5$;

$R^5$ Wasserstoff,
$C_1$-$C_6$-Alkyl, welches ein bis drei der folgenden Substituenten tragen kann: Halogen, $C_1$-$C_4$-Alkylamino, Di-($C_1$-$C_4$-alkyl)amino, $C_1$-$C_4$-Alkoxy und $C_1$-$C_4$-Alkylthio;
Phenyl oder Benzyl, welche ein bis drei der folgenden Gruppen tragen können: $C_1$-$C_4$-Alkyl, $C_1$-$C_4$-Alkoxy, $C_1$-$C_4$-Alkylthio, $C_1$-$C_4$-Halogenalkyl, Cyano, Nitro und/oder Halogen;

$R^6$ Phenyl, welches eine oder zwei der folgenden Gruppen tragen kann: Halogen, $C_1$-$C_4$-Alkyl, $C_1$-$C_4$-Alkoxy, $C_1$-$C_4$-Alkylthio, $C_1$-$C_4$-Halogenalkyl, Cyano und/oder Nitro;

$R^7$ Wasserstoff;
$C_1$-$C_6$-Alkyl, welches einen bis drei der folgenden Substituenten tragen kann: Halogen, $C_1$-$C_4$-Alkylamino, Di-($C_1$-$C_4$-alkyl)amino, $C_1$-$C_4$-Alkoxy, $C_1$-$C_4$-Alkylthio, Phenyl und/oder ($C_1$-$C_4$-Alkyl)oxycarbonyl;
Phenyl, welches einen bis drei der folgenden Substituenten tragen kann: Halogen, $C_1$-$C_4$-Alkyl, $C_1$-$C_4$-Alkoxy, $C_1$-$C_4$-Alkylthio, $C_1$-$C_4$-Halogenalkyl, Cyano und/oder Nitro;

$R^8$ Wasserstoff;
$C_1$-$C_6$-Alkyl, welches einen bis drei der folgenden Substituenten tragen kann: Halogen, $C_1$-$C_4$-Alkylamino, Di-($C_1$-$C_4$-alkyl)amino, $C_1$-$C_4$-Alkoxy, $C_1$-$C_4$-Alkylthio und/oder Phenyl;

$R^9$ $C_1$-$C_6$-Alkyl, welches einen bis drei der folgenden Substituenten tragen kann: $C_1$- $C_4$-Alkoxy, $C_1$- $C_4$-Alkylthio, $C_1$-$C_4$-Alkylamino, Di-($C_1$-$C_4$-alkyl)amino, Phenyl und/oder ein bis fünf Halogenatome;
Phenyl oder 5- bis 6-gliedriges Heteroaryl, wobei diese Ringe eine bis drei der folgenden Gruppen tragen können: $C_1$-$C_4$-Alkyl, $C_1$-$C_4$-Alkoxy, $C_1$-$C_4$-Alkylthio, $C_1$-$C_4$-Halogenalkyl, Nitro, Cyano und/oder Halogen;

$R^{10}$ $C_1$-$C_6$-Alkyl oder $C_2$-$C_6$-Alkenyl, wobei diese Gruppen einen bis drei der folgenden Substituenten tragen können: Halogen, $C_1$-$C_4$-Alkoxy, $C_1$-$C_4$-Alkylthio und/oder Phenyl;
Phenyl, welches ein bis drei der folgenden Substituenten tragen kann: $C_1$-$C_4$-Alkyl, $C_1$-$C_4$-Alkoxy, $C_1$-$C_4$-Alkylthio, $C_1$-$C_4$-Halogenalkyl, Nitro, Cyano und/oder Halogen;
oder $R^{10}$...$R^{10}$ gemeinsam
eine $C_2$-$C_4$-Alkylen- oder $C_2$-$C_4$-Alkenylenkette bilden, wobei diese Brücken einen bis drei der folgenden Substituenten tragen können: $C_1$-$C_4$-Alkyl, $C_1$-$C_4$-Alkoxy, $C_1$-$C_4$-Alkylthio, Halogen und/oder Phenyl, oder
einen anellierten Benzolring bilden, welcher ein bis vier Halogenatome und/oder einen bis drei der folgenden Reste tragen kann: $C_1$-$C_4$-Alkyl, $C_1$-$C_4$-Alkoxy, $C_1$-$C_4$-Alkylthio, $C_1$-$C_4$-Halogenalkyl, Cyano, Nitro und/oder Phenyl;

$R^{11}$, $R^{12}$ $C_1$-$C_4$-Alkyl oder gemeinsam mit dem C-Atom, an das sie gebunden sind $C_3$-$C_6$-Cycloalkyl;

B Wasserstoff,
$C_1$-$C_6$-Alkyl, welches einen bis drei der folgenden Substituenten tragen kann: Halogen, $C_1$-$C_4$-Alkoxy, $C_1$-$C_4$-Alkylthio, $C_1$-$C_4$-Alkylamino, Di-($C_1$-$C_4$-alkyl)amino, Phenyl und/oder $C_1$-$C_4$-Alkoxycarbonyl; $C_1$-$C_4$-Alkoxycarbonyl;
-$NR^7R^8$- oder
Phenyl, welches ein bis fünf Halogenatome und/oder einen bis drei der folgenden Substituenten tragen kann: $C_1$-$C_4$-Alkyl, $C_1$-$C_4$-Alkoxy, $C_1$-$C_4$-Halogenalkyl, Cyano und/oder Nitro;
als antagonistisch wirksame Verbindung und mindestens einen herbiziden Wirkstoff aus der Gruppe der Cyclohexenonderivate der Formel II

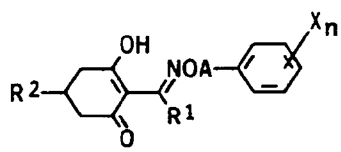 (II),

in der die Substituenten folgende Bedeutung haben:

$R^1$ eine $C_1$-$C_6$-Alkylgruppe;

A eine $C_4$-Alkylen- oder $C_4$-Alkenylenkette, wobei diese Ketten ein bis drei $C_1$-$C_3$-Alkylgruppen und/oder Halogenatome tragen können;

X Nitro, Cyano, Halogen, $C_1$-$C_4$-Alkyl, $C_1$-$C_4$-Alkoxy, $C_1$-$C_4$-Alkylthio, $C_1$-$C_4$-Halogenalkyl, $C_1$-$C_4$-Halogenalkoxy, Carboxyl, $C_1$-$C_4$-Alkoxycarbonyl, Benzyloxycarbonyl und/oder Phenyl, wobei die aromatischen Reste ein bis drei der folgenden Substituenten tragen können: Nitro, Cyano, Halogen, $C_1$-$C_4$-Alkyl, $C_1$-$C_4$-Alkoxy, $C_1$-$C_4$-Alkylthio, $C_1$-$C_4$-Halogenalkyl, $C_1$-$C_4$-Halogenalkoxy, Carboxyl, $C_1$-$C_4$-Alkoxycarbonyl und/oder Benzyloxycarbonyl;

n 0 bis 3 oder 1 bis 5 für den Fall, daß X Halogen bedeutet;

$R^2$ eine $C_1$-$C_4$-Alkoxy-$C_1$-$C_6$-alkyl- oder $C_1$-$C_4$-Alkylthio-$C_1$-$C_6$-alkylgruppe;
eine $C_3$-$C_7$-Cycloalkylgruppe oder eine $C_5$-$C_7$-Cycloalkenylgruppe, wobei diese Gruppen ein bis

drei der folgenden Substituenten tragen können: $C_1$-$C_4$-Alkyl, $C_1$-$C_4$-Alkoxy, $C_1$-$C_4$-Alkylthio, $C_1$-$C_4$-Halogenalkyl, Hydroxy und/oder Halogen;
ein 5-gliedriger gesättigter Heterocyclus der ein oder zwei Sauerstoff- und/oder Schwefelatome als Heteroatome enthält, und der eine bis drei der folgenden Gruppen tragen kann: $C_1$-$C_4$-Alkyl, $C_1$-$C_4$-Alkoxy, $C_1$-$C_4$-Alkylthio und/oder $C_1$-$C_4$-Halogenalkyl;
ein 6- oder 7-gliedriger Heterocyclus, enthaltend ein oder zwei Sauerstoff- und/oder Schwefelatome und bis zu zwei Doppelbindungen, wobei dieser Ring ein bis drei der folgenden Substituenten tragen kann: Hydroxy, Halogen, $C_1$-$C_4$-Alkyl, $C_1$-$C_4$-Alkoxy, $C_1$-$C_4$-Alkylthio, und/oder $C_1$-$C_4$-Halogenalkyl,
ein 5-gliedriger Heteroaromat, enthaltend ein bis zwei Stickstoffatome und ein Sauerstoffatom oder ein Schwefelatom, wobei dieser Ring ein bis drei der folgenden Substituenten tragen kann: Halogen, Cyano, $C_1$-$C_4$-Alkyl, $C_1$-$C_4$-Alkoxy, $C_1$-$C_4$-Alkylthio, $C_1$-$C_4$-Halogenalkyl, $C_2$-$C_6$-Alkenyl, $C_2$-$C_6$-Alkenyloxy, $C_2$-$C_6$-Halogenalkenyl und/oder $C_1$-$C_4$-Alkoxy-$C_1$-$C_4$-alkyl;
eine Phenylgruppe oder eine Pyridylgruppe, wobei diese Gruppen ein bis drei der folgenden Substituenten tragen können: Halogen, Nitro, Cyano, $C_1$-$C_4$-Alkyl, $C_1$-$C_4$-Alkoxy, $C_1$-$C_4$-Alkylthio, $C_1$-$C_4$-Halogenalkyl, $C_3$-$C_6$-Alkenyloxy, $C_3$-$C_6$-Alkinyloxy, $C_1$-$C_4$-Alkoxy-$C_1$-$C_4$-alkyl, $C_1$-$C_4$-Alkylthio-$C_1$-$C_4$-alkyl und/oder $-NR^{13}R^{14}$, worin

$R^{13}$ Wasserstoff, eine $C_1$-$C_4$-Alkylgruppe, eine $C_3$-$C_6$-Alkenylgruppe oder eine $C_3$-$C_6$-Alkinylgruppe und

$R^{14}$ Wasserstoff, eine $C_1$-$C_4$-Alkylgruppe, eine $C_3$-$C_6$-Alkenylgruppe, eine $C_3$-$C_6$-Alkinylgruppe, eine $C_1$-$C_6$-Acylgruppe oder ein Benzoylrest, wobei der aromatische Ring ein bis drei der folgenden Substituenten tragen kann: Nitro, Cyano, Halogen, $C_1$-$C_4$-Alkyl, $C_1$-$C_4$-Alkoxy, $C_1$-$C_4$-Alkylthio und/oder $C_1$-$C_4$-Halogenalkyl,

bedeuten.

2. Herbizides Mittel nach Anspruch 1, dadurch gekennzeichnet, daß das Anteilsverhältnis Herbizid der Formel II zu Naphthalinderivat I bei gemeinsamer oder getrennter Ausbringung 1:40 bis 1:0,01 Gew.-Teile beträgt.

3. Verfahren zur selektiven Bekämpfung von unerwünschtem Pflanzenwuchs, dadurch gekennzeichnet, daß man ein Naphthalinderivat der Formel I gemäß Anspruch 1 und ein Cyclohexenonderivat der Formel II vor, bei oder nach der Aussaat der Kulturpflanzen, vor oder während des Auflaufens der Kulturpflanzen gleichzeitig oder nacheinander in beliebiger Reihenfolge ausbringt.

4. Verfahren zur Verhinderung von Schädigungen von Kulturpflanzen durch herbizide Cyclohexenonderivate der Formel II gemäß Anspruch 1, dadurch gekennzeichnet, daß man das Saatgut der Kulturpflanzen mit einer antagonistisch wirksamen Menge eines Naphthalinderivats der Formel I gemäß Anspruch 1 behandelt.

5. Verfahren zur selektiven Bekämpfung von unerwünschtem Pflanzenwuchs, dadurch gekennzeichnet, daß man die Blätter der Kulturpflanzen und der unerwünschten Pflanzen im Nachauflaufverfahren mit einem Naphthalinderivat der Formel I gemäß Anspruch 1 und mit einem Cyclohexenonderivat der Formel II gleichzeitig oder nacheinander behandelt.

6. Verfahren nach den Ansprüchen 3 bis 5, dadurch gekennzeichnet, daß die Kulturpflanzen Gerste, Weizen, Mais, Kultursorghum und Reis sind.

## Claims

1. A herbicide containing one or more naphthalene derivatives of the formula I

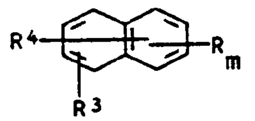

I

where
R is $C_1$-$C_4$-alkyl, $C_1$-$C_4$-alkylthio, $C_1$-$C_4$-haloalkyl, $C_1$-$C_4$-alkoxy, halogen, hydroxyl, nitro or benzyl;
m is 0, 1, 2 or 3, and the radicals R may be different when m is 2 or 3;
$R^3$ is -CN, -$C(NH_2)NOH$, -C(Z)$TR^5$,

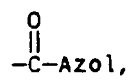, 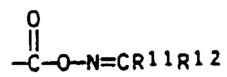 or 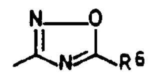 ;

$R^4$ is halogen, -$NR^7R^8$, -N=CH-$R^7$, -$NR^7$-$SO_2R^9$, $COOR^5$, OH,

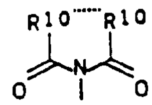 or 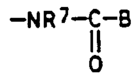

Z is oxygen or sulfur;
T is oxygen or -$NR^5$;
$R^5$ is hydrogen,
$C_1$-$C_6$-alkyl which may carry from one to three of the following substituents: halogen, $C_1$-$C_4$-alkylamino, di-$C_1$-$C_4$-alkylamino, $C_1$-$C_4$-alkoxy or $C_1$-$C_4$-alkylthio;
phenyl or benzyl which may carry from one to three of the following groups: $C_1$-$C_4$-alkyl, $C_1$-$C_4$-alkoxy, $C_1$-$C_4$-alkyl-thio, $C_1$-$C_4$-haloalkyl, cyano, nitro and/or halogen;
$R^6$ is phenyl which may carry one or two of the following groups: halogen, $C_1$-$C_4$-alkyl, $C_1$-$C_4$-alkoxy, $C_1$-$C_4$-alkyl-thio, $C_1$-$C_4$-haloalkyl, cyano and/or nitro;
$R^7$ is hydrogen,
$C_1$-$C_6$-alkyl which may carry from one to three of the following substituents: halogen, $C_1$-$C_4$-alkylamino, di-$C_1$-$C_4$-alkylamino, $C_1$-$C_4$-alkoxy, $C_1$-$C_4$-alkylthio, phenyl and/or ($C_1$-$C_4$-alkyl)-oxycarbonyl, or
phenyl which may carry from one to three of the following substituents: halogen, $C_1$-$C_4$-alkyl, $C_1$-$C_4$-alkoxy, $C_1$-$C_4$-alkylthio, $C_1$-$C_4$-haloalkyl, cyano and/or nitro;
$R^8$ is hydrogen,
$C_1$-$C_6$-alkyl which may carry from one to three of the following substituents: halogen, $C_1$-$C_4$-alkylamino, di-$C_1$-$C_4$-alkylamino, $C_1$-$C_4$-alkoxy, $C_1$-$C_4$-alkylthio and/or phenyl;
$R^9$ is $C_1$-$C_6$-alkyl which may carry from one to three of the following substituents: $C_1$-$C_4$-alkoxy, $C_1$-$C_4$-alkylthio, $C_1$-$C_4$-alkylamino, di-$C_1$-$C_4$-alkylamino, phenyl and/or from one to five halogen atoms, or
phenyl or 5-membered or 6-membered hetaryl, where these rings may carry from one to three of the following groups: $C_1$-$C_4$-alkyl, $C_1$-$C_4$-alkoxy, $C_1$-$C_4$-alkylthio, $C_1$-$C_4$-haloalkyl, nitro, cyano and/or halogen;
$R^{10}$ is $C_1$-$C_6$-alkyl or $C_2$-$C_6$-alkenyl, where these groups may carry from one to three of the following substituents: halogen, $C_1$-$C_4$-alkoxy, $C_1$-$C_4$-alkylthio and/or phenyl, or phenyl which may carry from one to three of the following substituents: $C_1$-$C_4$-alkyl, $C_1$-$C_4$-alkoxy, $C_1$-$C_4$-alkylthio, $C_1$-$C_4$-haloalkyl, nitro, cyano and/or halogen;
or $R^{10}$...$R^{10}$ together form
a $C_2$-$C_4$-alkylene or $C_2$-$C_4$-alkenylene chain, where these bridges may carry from one to three of the following substituents: $C_1$-$C_4$-alkyl, $C_1$-$C_4$-alkoxy, $C_1$-$C_4$-alkylthio, halogen and/or phenyl, or
a fused benzene ring, which may carry from one to four halogen atoms and/or from one to three of the following radicals: $C_1$-$C_4$-alkyl, $C_1$-$C_4$-alkoxy, $C_1$-$C_4$-alkylthio, $C_1$-$C_4$-haloalkyl, cyano, nitro and/or phenyl;
$R^{11}$ and $R^{12}$ are each $C_1$-$C_4$-alkyl, or, together with the carbon atom to which they are bonded, form $C_3$-$C_6$-cycloalkyl;
B is hydrogen,
$C_1$-$C_6$-alkyl, which may carry from one to three of the following substituents: halogen, $C_1$-$C_4$-alkoxy, $C_1$-$C_4$-alkylthio, $C_1$-$C_4$-alkylamino, di-$C_1$-$C_4$-alkylamino, phenyl and/or $C_1$-$C_4$-alkoxycarbonyl,
$C_1$-$C_4$-alkoxycarbonyl,
-$NR^7R^8$- or
phenyl which may carry from one to five halogen atoms and/or from one to three of the following substituents: $C_1$-$C_4$-alkyl, $C_1$-$C_4$-alkoxy, $C_1$-$C_4$-haloalkyl, cyano and/or nitro,
as an antagonistic compound and one or more herbicidal active ingredients of the group consisting of the cyclohexenone derivatives of the formula II

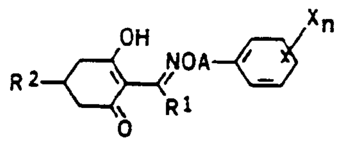

(II)

where
$R^1$ is $C_1$-$C_6$-alkyl;
A is a $C_4$-alkylene or $C_4$-alkenylene chain, where these chains may carry from one to three $C_1$-$C_3$-alkyl groups and/or halogen atoms;
X is nitro, cyano, halogen, $C_1$-$C_4$-alkyl, $C_1$-$C_4$-alkoxy, $C_1$-$C_4$-alkylthio, $C_1$-$C_4$-haloalkyl, $C_1$-$C_4$-haloalkoxy, carboxyl, $C_1$-$C_4$-alkoxycarbonyl, benzyloxycarbonyl and/or phenyl, where the aromatic radicals may carry from one to three of the following substituents: nitro, cyano, halogen, $C_1$-$C_4$-alkyl, $C_1$-$C_4$-alkoxy, $C_1$-$C_4$-alkylthio, $C_1$-$C_4$-haloalkyl, $C_1$-$C_4$-haloalkoxy, carboxyl, $C_1$-$C_4$-alkoxycarbonyl and/or benzyloxycarbonyl;
n is from 0 to 3, or is from 1 to 5 when X is halogen;
$R^2$ is $C_1$-$C_4$-alkoxy-$C_1$-$C_6$-alkyl or $C_1$-$C_4$-alkylthio-$C_1$-$C_6$-alkyl,
$C_3$-$C_7$-cycloalkyl or $C_5$-$C_7$-cycloalkenyl, where these groups may carry from one to three of the following substituents: $C_1$-$C_4$-alkyl, $C_1$-$C_4$-alkoxy, $C_1$-$C_4$-alkylthio, $C_1$-$C_4$-haloalkyl, hydroxyl and/or halogen,
a 5-membered saturated heterocyclic structure which contains one or two oxygen and/or sulfur atoms as hetero atoms and which may carry from one to three of the following groups: $C_1$-$C_4$-alkyl, $C_1$-$C_4$-alkoxy, $C_1$-$C_4$-alkylthio and/or $C_1$-$C_4$-haloalkyl,
a 6-membered or 7-membered heterocyclic structure containing one or two oxygen and/or sulfur atoms and up to two double bonds, where this ring may carry from one to three of the following substituents: hydroxyl, halogen, $C_1$-$C_4$-alkyl, $C_1$-$C_4$-alkoxy, $C_1$-$C_4$-alkylthio and/or $C_1$-$C_4$-haloalkyl,
a 5-membered heteroaromatic structure containing one or two nitrogen atoms and one oxygen atom or one sulfur atom, where this ring may carry from one to three of the following substituents: halogen, cyano, $C_1$-$C_4$-alkyl, $C_1$-$C_4$-alkoxy, $C_1$-$C_4$-alkylthio, $C_1$-$C_4$-haloalkyl, $C_2$-$C_6$-alkenyl, $C_2$-$C_6$-alkenyloxy, $C_2$-$C_6$-haloalkenyl and/or $C_1$-$C_4$-alkoxy-$C_1$-$C_4$-alkyl, or
phenyl or pyridyl, where these groups may carry from one to three of the following substituents: halogen, nitro, cyano, $C_1$-$C_4$-alkyl, $C_1$-$C_4$-alkoxy, $C_1$-$C_4$-alkylthio, $C_1$-$C_4$-haloalkyl, $C_3$-$C_6$-alkenyloxy, $C_3$-$C_6$-alkynyloxy, $C_1$-$C_4$-alkoxy-$C_1$-$C_4$-alkyl, $C_1$-$C_4$-alkylthio-$C_1$-$C_4$-alkyl and/or $-NR^{13}R^{14}$, where
$R^{13}$ is hydrogen, $C_1$-$C_4$-alkyl, $C_3$-$C_6$-alkenyl or $C_3$-$C_6$-alkynyl and
$R^{14}$ is hydrogen, $C_1$-$C_4$-alkyl, $C_3$-$C_6$-alkenyl, $C_3$-$C_6$-alkynyl, $C_1$-$C_6$-acyl or benzoyl, where the aromatic ring may carry from one to three of the following substituents: nitro, cyano, halogen, $C_1$-$C_4$-alkyl, $C_1$-$C_4$-alkoxy, $C_1$-$C_4$-alkylthio and/or $C_1$-$C_4$-haloalkyl.

2. A herbicide as claimed in claim 1, wherein the weight ratio of the herbicide of the formula II to the naphthalene derivative I for combined or separate application is from 1 : 40 to 1 : 0.01.

3. A method for selectively controlling undesirable plant growth, wherein a naphthalene derivative of the formula I as claimed in claim 1 and a cyclohexenone derivative of the formula II are applied simultaneously or in succession in any order, before, during or after sowing of the crops or before or during emergence of the crops.

4. A method for preventing damage to crops by herbicidal cyclohexenone derivatives of the formula II as claimed in claim 1, wherein the seed of the crops is treated with an antagonistic amount of a naphthalene derivative of the formula I as claimed in claim 1.

5. A method for selectively controlling undesirable plant growth, wherein the leaves of the crops and of the undesirable plants are treated simultaneously or in succession, by the postemergence method, with a naphthalene derivative of the formula I as claimed in claim 1 and with a cyclohexenone derivative of the formula II.

6. A method as claimed in claim 3 or 4 or 5, wherein the crops are barley, wheat, corn, sorghum and rice.

## Revendications

1. Agent herbicide contenant comme composé à action antagonistique au moins un dérivé de naphtalène de la formule I

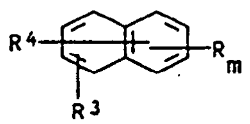

I

dans laquelle les substituants et les indices ont les significations suivantes:

| | |
|---|---|
| R | alkyle en C1-C4, alkylthio en C1-C4, halogénalkyle en C1-C4, alcoxy en C1-C4, halogène, hydroxy, nitro ou benzyle |
| m | 0,1, 2 ou 3, les restes R pouvant être différents quand m = 2 ou 3 |
| $R^3$ | -CN; $-C(NH_2)NOH$; $-C(Z)TR^5$; |

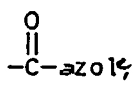 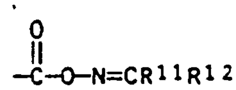 ou 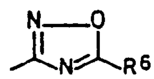 ;

| | |
|---|---|
| $R^4$ | halogène; $-NR^7R^8$; $-N=CH-R^7$; $-NR^7-SO_2R^9$; $COOR^5$; OH |

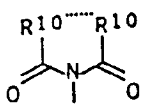 ou 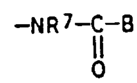 et

| | |
|---|---|
| Z | oxygène ou soufre |
| T | oxygène ou $-NR^5$ |
| $R^5$ | hydrogène, alkyle en C1-C6 qui peut porter un à trois des substituants suivants: halogène, alkylamino en C1-C4, di-(alkyle en C1-C4)amino, alcoxy en C1-C4 et alkylthio en C1-C4; phényle ou benzyle qui peuvent porter un à trois des substituants suivants : alkyle en C1-C4, alcoxy en C1-C4, alkylthio en C1-C4, halogénalkyle en C1-C4, cyano, nitro et/ou halogène; |
| $R^6$ | phényle, qui peut porter un ou deux des groupes suivants : halogène, alkyle en C1-C4, alcoxy en C1-C4, alkylthio en C1-C4, halogénalkyle en C1-C4, cyano et/ou nitro; |
| $R^7$ | hydrogène, alkyle en C1-C6 qui peut porter un à trois des substituants suivants : halogène, alkylamino en C1-C4, di-(alkyle en C1-C4)amino, alcoxy en C1-C4, alkylthio en C1-C4, phényle et/ou (alkyle en C1-C4)-oxycarbonyle; phényle, qui peut porter un à trois des substituants suivants : halogène, alkyle en C1-C4, alcoxy en C1-C4, alkylthio en C1-C4, halogénalkyle en C1-C4, cyano et/ou nitro; |
| $R^8$ | hydrogène, alkyle en C1-C6 qui peut porter un à trois des substituants suivants : halogène, alkylamino en C1-C4, di-(alkyle en C1-C4)amino, alcoxy en C1-C4, alkylthio en C1-C4 et/ou phényle; |
| $R^9$ | alkyle en C1-C6, qui peut porter un à trois des substituants suivants alcoxy en C1-C4, alkylthio en C1-C4, alkylamino en C1-C4, di-(alkyle en C1-C4)amino, phényle et/ou un à cinq atomes d'halogène; phényle ou hétéroaryle à 5 ou 6 chaînons, ces noyaux pouvant porter un à trois des groupes suivants : alkyle en C1-C4, alcoxy en C1-C4, alkylthio en C1-C4, halogénalkyle en C1-C4, nitro, cyano et/ou halogène; |
| $R^{10}$ | alkyle en C1-C6 ou alcényle en C2-C6, ces groupes pouvant porter un à trois des substituants suivants : halogène, alcoxy en C1-C4, alkylthio en C1-C4 et/ou phényle; phényle, qui peut porter un à trois des substituants suivants : alkyle en C1-C4, alcoxy en C1-C4, alkylthio en C1-C4, halogène en C1-C4-alkyle, nitro, cyano et/ou halogène, ou $R^{10}$...$R^{10}$ ensemble forment une chaîne alkylène en C1-C4 ou alcénylène en C1-C4, |

ces ponts pouvant porter un à trois des substituants suivants : alkyle en C1-C4, alcoxy en C1-C4, alkylthio en C1-C4, halogène et/ou phényle, ou forment un noyau benzène condensé qui peut porter un à quatre atomes d'halogène et/ou un à trois des restes suivants : alkyle en C1-C4, alcoxy en C1-C4, alkylthio en C1-C4, halogénalkyle en C1-C4, cyano, nitro et/ou phényle;

$R^{11}$, $R^{12}$ alkyle en C1-C4 ou ensemble avec l'atome C auquel ils sont liés, cycloalkyle en C3-C6

B hydrogène, alkyle en C1-C6 qui peut porter un à trois des substituants suivants : halogène, alcoxy en C1-C4, alkylthio en C1-C4, alkyle en C1-C4-amino, di-(alkyle en C1-C4)amino, phényle et/ou alcoxy en C1-C4-carbonyle,
alcoxy en C1-C4-carbonyle; $-NR^7R^8$ ou
phényle, qui peut porter un à cinq atomes d'halogènes et/ou un à trois substituants suivants : alkyle en C1-C4, alcoxy en C1-C4, halogénalcoxy en C1-C4, cyano et/ou nitro;
et au moins un principe actif herbicide du groupe des dérivés de cyclohexénone de la formule II

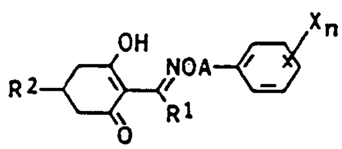

(II),

dans laquelle les substituants ont les significations suivantes :

$R^1$ un groupe alkyle en C1-C6

A une chaîne alkylène en C4 ou alcényle en C4
ces chaînes pouvant porter un à trois groupes alkyle en C1-C3 et/ou atomes d'halogène;

X nitro, cyano, halogène, alkyle en C1-C4, alcoxy en C1-C4, alkylthio en C1-C4, halogénalkyle en C1-C4, halogénalcoxy en C1-C4, carboxyle, alcoxy en C1-C4-carbonyle, benzyle-oxycarbonyle et/ou phényle, les restes aromatiques pouvant porter un à trois des substituants suivants:
nitro, cyano, halogène, alkyle en C1-C4, alcoxy en C1-C4, alkylthio en C1-C4, halogénalkyle en C1-C4, halogénalcoxy en C1-C4, carboxyle-alcoxy en C1-C4-carbonyle et/ou benzyloxycarbonyle;

n 0 à 3 ou 1 à 5 dans le cas où X représente halogène

$R^2$ un groupe alcoxy en C1-C4, alkyle en C1-C6 ou alkylthio en C1-C4-alkyle en C1-C6;
un groupe cycloalkyle en C3-C7 ou cycloalcényle en C5-C7 ces groupes pouvant porter un à trois des substituants suivants : alkyle en C1-C4, alcoxy en C1-C4, alkylthio en C1-C4, halogénalkyle en C1-C4, hydroxy et/ou halogène;
un hétérocyle saturé à 5 chaînons qui contient un ou deux atomes d'oxygène et/ou soufre comme hétéroatomes et qui peut porter un à trois des groupes suivants : alkyle en C1-C4, alcoxy en C1-C4, alkylthio en C1-C4 et/ou halogénalkyle en C1-C4;
un hétérocyle à 6 ou 7 chaînons contenant un ou deux atomes d'oxygène et jusqu'à deux double liaisons, ce noyau pouvant porter un à trois des substituants suivants : (hydroxy, halogène, alkyle en C1-C4, alcoxy en C1-C4, alkylthio en C1-C4 et/ou halogénalkyle en C1-C4);
un hétéroaromate à 5 chaînons, contenant un à deux atomes d'azote et un atome d'oxygène ou un atome de soufre, ce noyant pouvant porter un à trois des substituants suivants : halogène, cyano, alkyle en C1-C4, alcoxy ene C1-C4, alkylthio en C1-C4, halogénalkyle en C1-C4, alcényle en C2-C6, alcényloxy en C2-C6, halogénalcényle en C2-C6 et/ou alcoxy en C1-C4-alkyle en C1-C4;
un groupe phényle ou un groupe pyridyle, ces groupes pouvant porter un à trois des substituants suivants : halogène, nitro, cyano, alkyle en C1-C4, alcoxy en C1-C4, alkylthio en C1-C4, halogénalkyle en C1-C4, alcényloxy en C3-C6, alcinyloxy en C3-C6, alcoxy en C1-C4-alkyle en C1-C4, alkyle en C1-C4-thio-alkyle en C1-C4 et/ou $-NR^{13}R^{14}$, où

$R^{13}$ représente hydrogène, un groupe alkyle en C1-C4,
un groupe alcényle en C3-C6 ou un groupe alcinyle en C3-C6 et

$R^{14}$ représente hydrogène, un groupe alkyle en C1-C4
un groupe alcényle en C3-C6, un groupe alcinyle en C3-C6, un groupe acyle en C1-C6 ou un reste benzoyle, le noyau aromatique pouvant porter un à trois des substituants suivants : nitro, cyano, halogène, alkyle en C1-C4, alcoxy en C1-C4, alkylthio en C1-C4 et/ou halogénalkyle en C1-C4.

2. Agent herbicide selon la revendication 1, caractérisé par le fait que le rapport en partie d'herbicide de la formule II au dérivé de naphtalène I est, en production commune ou séparée, de 1/40 à 1/0,9 parties en poids.

3. Procédé pour la lutte sélective contre la croissance des plantes indésirables, caractérisé par le fait que l'on applique un dérivé de naphtalène de formule I selon la revendication 1 et un dérivé de cyclohexénone de formule II, avant, pendant ou après l'ensemencement des plantes de culture, avant ou pendant la levée des plantes simultanément ou successivement en suite appropriée.

4. Procédé pour empêcher l'endommagement des plantes cultivées par des dérivés de cyclohexénone herbicide de formule II selon la revendication 1, caractérisé par le fait que l'on traite les semences des plantes avec une quantité à action antagonistique d'un dérivé de naphtalène de formule I selon la revendication 1.

5. Procédé pour la lutte sélective contre la croissance des plantes indésirables, caractérisé par le fait que l'on traite simultanément ou les unes après les autres les feuilles des plantes cultivées et les plantes indésirables en processus de post-émergence avec un dérivé de naphtalène de formule I selon la revendication 1 et avec un dérivé de cyclohexénone de formule II.

6. Procédé selon les revendications 3 à 5, caractérisé par le fait que les plantes de culture sont l'orge, le blé, le maïs, le sorgho et le riz.